# EUROPEAN PATENT APPLICATION

(11) **EP 4 213 536 A1**
(43) Date of publication of application: **19.07.2023**
(21) Application number: 21873831.8
(22) Date of filing: 01.04.2021
(51) Int. Cl.: H04W 36/00

(54) **COMMUNICATION METHOD AND RELATED DEVICE**

(30) Priority: 30.09.2020 WO PCT/CN2020/119697; 19.12.2020 WO PCT/CN2020/137817
(71) Applicant: Huawei Technologies Co., Ltd., Shenzhen, Guangdong 518129 (CN)
(72) Inventor: LIU, Jing, Shenzhen, Guangdong 518129 (CN); ZHU, Yuanping, Shenzhen, Guangdong 518129 (CN); SHI, Yulong, Shenzhen, Guangdong 518129 (CN); SUN, Fei, Shenzhen, Guangdong 518129 (CN)
(74) Representative: Maiwald GmbH
(86) International application number: PCT/CN2021/085137
(87) International publication number: WO 2022/068164

(57) **Abstract**

Embodiments of this application provide a communication method and a related device. The method includes: When a first node determines that an RLF occurs on a radio link between the first node and a second node, and there is no other available path between the first node and a destination node, the first node sends first indication information to a third node. The first indication information indicates the RLF or indicates that a link recovery attempt is being made. The second node is a parent node of the first node, and the third node is a child node of the first node; or the second node is a child node of the first node, and the third node is a parent node of the first node or a donor node connected to the first node. According to the method, a re-routing function of a relay node can be fully utilized, to improve data relay stability, and avoid an unnecessary waste of link resources and unnecessary overheads of air interface signaling.

## Description

This application claims priority to PCT International Application No. PCT/CN2020/119697, filed with the China National Intellectual Property Administration on September 30, 2020 and entitled "COMMUNICATION METHOD AND RELATED DEVICE", and to PCT International Application No. PCT/CN2020/137817, filed with the China National Intellectual Property Administration on December 19, 2020 and entitled "COMMUNICATION METHOD AND RELATED DEVICE", which are incorporated herein by reference in their entireties.

### TECHNICAL FIELD

This application relates to the field of communication technologies, and more specifically, to a communication method and a related device.

### BACKGROUND

In a relay network, a radio link failure (radio link failure, RLF) may occur on a radio link between a relay node and a parent node. When the RLF occurs between the relay node and the parent node, the relay node first attempts to recover the link. When the relay node fails to recover the link, the relay node sends RLF indication information to a child node of the relay node, to indicate occurrence of the RLF to the child node, so that the child node can trigger a re-routing operation, and transmit to-be-transmitted data via another relay node.

However, when successfully performing re-routing, the original relay node still sends the RLF indication information to the child node of the relay node, to trigger the child node to perform re-routing. This causes an unnecessary waste of link resources and unnecessary overheads of air interface resources.

### SUMMARY

In view of this, this application provides a communication method and a related device, to implement proper re-routing when an RLF occurs.

According to a first aspect, this application provides a communication method. The method may include: When a first node determines that an RLF occurs on a radio link between the first node and a second node, and there is no other available path between the first node and a destination node, the first node sends first indication information to a third node. The first indication information indicates the RLF or indicates that a link recovery attempt is being made. The second node is a parent node of the first node, and the third node is a child node of the first node; or the second node is a child node of the first node, and the third node is a parent node of the first node or a donor node connected to the first node.

According to this design, for example, beneficial effects include: A re-routing function of a relay node can be fully utilized, to improve data relay stability, and avoid an unnecessary waste of link resources and unnecessary overheads of air interface signaling.

In a feasible design, when the second node is a parent node of the first node, and the third node is a child node of the first node, when determining that the RLF occurs on the radio link between the first node and the second node and the radio link recovery attempt is being made, and determining that there is no other available path between the first node and the destination node, the first node sends the first indication information to the third node. The first indication information indicates that the link recovery attempt is being made.

According to this design, for example, beneficial effects include: A re-routing function and a link recovery function of a relay node can be fully utilized, to improve data relay stability, and avoid an unnecessary waste of link resources and unnecessary overheads of air interface signaling.

In a feasible design, the first node further sends second indication information to the third node, where the second indication information indicates that a path that passes through the first node to the destination node is unavailable.

According to this design, for example, beneficial effects include: The third node can obtain more accurate information about the RLF, to implement more efficient and accurate re-routing.

In a feasible design, the second indication information includes a backhaul adaptation protocol (Backhaul Adaptation Protocol, BAP) address of the destination node.

According to this design, for example, beneficial effects include: It may be indicated to the third node that all paths that pass through the first node to the destination node are unavailable, so that the third node implements more efficient and accurate re-routing.

In a feasible design, the second indication information includes a routing identity (routing identity, routing ID) corresponding to the path that passes through the first node to the destination node.

In a feasible design, the second indication information includes a path identity (path identity, path ID) corresponding to the path that passes through the first node to the destination node.

In a feasible design, that the second indication information indicates that a path that passes through the first node to the destination node is unavailable includes: The second indication information indicates that all paths that pass through the first node to the destination node are unavailable; the second indication information indicates that a path whose corresponding path ID is equal to the path ID included in the second indication information is unavailable in all paths that pass through the first node to the destination node; or the second indication information indicates that a path whose corresponding routing ID is equal to the routing ID included in the second indication information is unavailable in all paths that pass through the first node to the destination node.

According to this design, for example, beneficial effects include: It may be indicated to the third node that which paths that pass through the first node to the destination node are unavailable, so that the third node implements more efficient and accurate re-routing.

In a feasible design, when the second node is a child node of the first node, and the third node is a donor node connected to the first node, the second indication information includes an identifier of the second node.

In a feasible design, that the second indication information indicates that a path that passes through the first node to the destination node is unavailable includes: The second indication information indicates that a path that includes the direct radio link between the first node and the second node is unavailable in all paths that pass through the first node to the destination node.

According to this design, for example, beneficial effects include: When receiving the identifier of the second node from the first node, the donor node (namely, the third node) can accurately determine a case in which the RLF occurs, so that the third node implements more efficient and accurate re-routing.

According to a second aspect, this application provides a communication method. The method may include: When a third node receives second indication information from a first node, where the second indication information indicates that a path that passes through the first node to a destination node is unavailable, the third node determines to route data to the destination node through another path.

In a feasible design, the third node further receives first indication information from the first node, where the first indication information indicates an RLF or indicates that a link recovery attempt is being made.

In a feasible design, the second indication information includes a BAP address of the destination node, a routing ID corresponding to the path that passes through the first node to the destination node, or a path identity (path identity, path ID) corresponding to the path that passes through the first node to the destination node.

In a feasible design, the another path does not include the first node, a routing ID of the another path is not equal to the routing ID included in the second indication information, or a path ID of the another path is not equal to the path ID included in the second indication information.

In a feasible design, the second indication information includes an identifier of a second node, the second node is a child node of the first node, and the RLF occurs on a radio link between the first node and the second node.

In a feasible design, a routing ID of the another path is not equal to a routing ID corresponding to a path that passes through the first node to the destination node and that includes the direct radio link between the first node and the second node.

In a feasible design, when the third node receives third indication information from the first node, where the third indication information indicates that radio link recovery succeeds, the third node stops routing the data to the destination node through the another path used for re-routing.

According to this design, for example, beneficial effects include: The third node can stop re-routing in time, and recover using, to route data, a source path used before the RLF is notified (in other words, recover using original routing configuration information to route data), so that processing complexity of an upstream node or a downstream node of the third node can be reduced.

According to a third aspect, this application provides a communication method. The method may include: A first node receives a first message from a master base station of a fourth node, where the first message requests to add the first node as a secondary base station of the fourth node. The first message includes: a physical cell identifier PCI of a cell that is of a second node and that is accessed by the fourth node and a cell radio network temporary identifier C-RNTI of the fourth node in the cell of the second node; or an identifier of a third node and an identifier of the fourth node on an interface between the third node and the first node. The third node is a source secondary base station of the fourth node, and the fourth node is a downstream node of the second node. The first node further obtains context information of the fourth node.

According to the method, for example, beneficial effects include: Because the context information of the fourth node has been cached on the first node, the message sent by the master base station to the first node does not carry the context information of the fourth node again, to reduce air interface overheads. An identifier of the fourth node, for example, the PCI of the cell that is of the second node and that is accessed by the fourth node and the C-RNTI of the fourth node in the cell of the second node, is carried in the message sent by the master base station to the first node. In this way, the first node can obtain the context information of the fourth node based on the identifier of the fourth node in the first message, and then the first node becomes a new secondary base station of the fourth node to provide a service for the fourth node. This avoids data interruptions of the fourth node.

In a feasible design, before receiving the first message, the method further includes: The first node receives a second message from the second node, where the second message requests to establish or re-establish a radio resource control RRC connection to the second node. Then, the first node sends a third message to the third node, where the third message requests to obtain context information related to the second node. Then, the first node receives a fourth message from the third node, where the fourth message includes the context information related to the second node. The third node sends a fifth message to the second node, where the fifth message is used to establish or re-establish the RRC connection to the second node.

In a feasible design, the fifth message includes information used to update a cell served by the second node.

In a feasible design, the information used to update the cell served by the second node includes a global cell identifier CGI and/or a cell identity of the cell of the second node when the second node is connected to the first node.

In a feasible design, the context information related to the second node includes at least one of the following: context information of the second node, topology information between the second node and the fourth node, the context information of the fourth node, indication information indicating whether the second node is a wireless backhaul device, or indication information indicating whether the fourth node is a wireless backhaul device.

In a feasible design, the context information of the fourth node includes the PCI and the C-RNTI.

In a feasible design, the context information of the fourth node includes the identifier of the third node and the identifier of the fourth node on the interface between the third node and the first node.

According to a fourth aspect, this application provides a communication method. The method may include: A master base station of a fourth node receives a sixth message from a third node, where the sixth message requests to use a first node as a target secondary base station of the fourth node, and the third node is a source secondary base station of the fourth node. Then, the master base station sends a first message to the first node, where the first message requests to add the first node as a secondary base station of the fourth node, and the first message includes a physical cell identifier PCI of a cell that is of a second node and that is accessed by the fourth node and a cell radio network temporary identifier C-RNTI of the fourth node in the cell of the second node; or the first message includes an identifier of the third node and an identifier of the fourth node on an interface between the third node and the first node.

According to the method, for example, beneficial effects include: The second node may be re-established from the source secondary base station to a destination secondary base station, to reduce impact on a downstream node (the fourth node) of the second node, and ensure normal working of the downstream node of the second node.

According to a fifth aspect, this application provides a communication method. The method may include: A first node determines first information. The first node determines, based on the first information, whether to trigger re-routing.

In a first feasible design, the first node determines the first information. The first information includes a first threshold. In this case, the first node triggers re-routing when a quantity of transmission/retransmission times of a data packet of the first node reaches/exceeds the first threshold. Alternatively, the first information includes a configuration of a timer, and the configuration of the timer includes timer duration. In this case, the first node triggers re-routing when the timer expires and a data packet of the first node has not been successfully sent.

In a second feasible design, the first node receives the first information from a third node. The first information includes a first threshold, and the first information indicates to trigger re-routing when a quantity of transmission/retransmission times of a data packet of the first node reaches/exceeds the first threshold. Alternatively, the first information includes a configuration of a timer, and the first information indicates to trigger re-routing when the timer expires and the data packet of the first node has not been successfully sent.

In the second feasible design, the first node determines, based on the first information, whether to trigger uplink re-routing, where the data packet of the first node is an uplink data packet. The third node may be a donor node connected to the first node or an upstream node.

In the second feasible design, the first node determines, based on the first information, whether to trigger downlink re-routing, where the data packet of the first node is a downlink data packet. The third node may be a donor node connected to the first node. In a feasible design, the data packet of the first node may be a BAP layer/RLC layer/MAC layer/PHY layer data packet.

In a feasible design, when the data packet of the first node is the RLC layer data packet, the first threshold needs to be less than a maximum retransmission threshold of the RLC layer.

In a feasible design, when the data packet of the first node is the RLC layer data packet, timer duration needs to meet the following requirement: Before the timer expires, a quantity of transmission/retransmission times of the RLC layer data packet of the first node is less than the maximum retransmission threshold of the RLC layer.

In a feasible design, the maximum retransmission threshold of the RLC layer may be used by the first node to determine whether a radio link failure occurs. The maximum retransmission threshold of the RLC layer may be configured by the donor node for the first node by using an RRC message.

According to a sixth aspect, this application provides a communication method. The method may include: When a first node determines that radio links between the first node and all second nodes are unavailable, the first node sends first indication information to a third node. The first indication information indicates an RLF or indicates that a link recovery attempt is being made. The second node is a child node of the first node, and the third node is a parent node of the first node or a donor node connected to the first node; or the second node is a parent node of the first node, and the third node is a child node of the first node.

In a feasible design, when determining that the radio links between the first node and all the second nodes are unavailable, and the link recovery attempt is being made, the first node sends the first indication information to the third node. The first indication information indicates that the link recovery attempt is being made.

In a feasible design, the first node further sends second indication information to the third node, where the second indication information indicates that the first node is unavailable, or indicates that channels between the first node and all the second nodes are unavailable.

In a feasible design, the second indication information includes a backhaul adaptation protocol (Backhaul Adaptation Protocol, BAP) address of the first node.

In a feasible design, the second indication information includes an identifier of a second backhaul RLC channel, and there is a correspondence between the second backhaul RLC channel and a first backhaul RLC channel. The first backhaul RLC channel includes all backhaul RLC channels between the first node and the second node, and the second backhaul RLC channel includes all backhaul RLC channels between the first node and the third node.

In a feasible design, the first node maps data from the first backhaul RLC channel to the second backhaul RLC channel based on the correspondence between the second backhaul RLC channel and the first backhaul RLC channel, or the first node maps data from the second backhaul RLC channel to the first backhaul RLC channel based on the correspondence.

In a feasible design, when determining that the RLF occurs on the radio links between the first node and all the second nodes, a DU of the first node sends third indication information to an MT of the first node, where the third indication information indicates the MT of the first node to send the first indication information to the third node.

In a feasible design, the first indication information is carried in a BAP control PDU or a MAC CE.

According to a seventh aspect, this application provides a communication method. The method may include: When a first node determines that a first backhaul RLC channel between the first node and a second node is unavailable, the first node sends first indication information to a third node. The first indication information indicates that a second backhaul RLC channel between the first node and the third node is unavailable, or an attempt is being made to recover the backhaul RLC channel. There is a correspondence between the second backhaul RLC channel and the first backhaul RLC channel. The second node is a child node of the first node, and the third node is a parent node of the first node or a donor node connected to the first node; or the second node is a parent node of the first node, and the third node is a child node of the first node.

In a feasible design, when determining that the first backhaul RLC channel between the first node and the second node is unavailable, and the attempt is being made to recover the backhaul RLC channel, the first node sends the first indication information to the third node. The first indication information indicates that the attempt is being made to recover the backhaul RLC channel.

In a feasible design, the first indication information includes an identifier of the second backhaul RLC channel.

In a feasible design, the first node maps data from the first backhaul RLC channel to the second backhaul RLC channel based on the correspondence between the second backhaul RLC channel and the first backhaul RLC channel, or the first node maps data from the second backhaul RLC channel to the first backhaul RLC channel based on the correspondence.

In a feasible design, the second node is located between the first node and a master base station/a master donor node of the first node, or is located between the first node and a secondary donor node of the first node; or the second node is a master base station/a master donor node of the first node; or the second node is a secondary donor node of the first node. According to an eighth aspect, this application provides a communication apparatus. The apparatus includes a module configured to perform the method in any one of the first aspect to the seventh aspect and the designs thereof.

According to a ninth aspect, this application provides a communication apparatus, including a processor and a memory. The processor is coupled to the memory, and the processor is configured to implement the method in any one of the first aspect to the seventh aspect and the designs thereof.

According to a tenth aspect, this application provides a communication apparatus, including at least one processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement, by using a logic circuit or executing code instructions, the method in any one of the first aspect to the seventh aspect and the designs thereof.

In a possible design, the apparatus may be a chip or an integrated circuit in a node in the method in any one of the first aspect to the seventh aspect and the designs thereof.

Optionally, the communication apparatus may further include at least one memory, and the memory stores related program instructions.

According to an eleventh aspect, this application provides a communication apparatus. The apparatus has a function or an operation for implementing the method in any one of the first aspect to the seventh aspect and the designs thereof, and the function or the operation may be implemented by hardware, or may be implemented by hardware by executing corresponding software. The hardware or the software includes one or more units (modules) corresponding to the foregoing functions or operations, for example, includes a transceiver unit and a processing unit.

According to a twelfth aspect, this application provides a computer-readable storage medium. The computer-readable storage medium stores program instructions, and when the program instructions are run, the communication apparatus is enabled to implement the method in any one of the first aspect to the seventh aspect and the designs thereof.

According to a thirteenth aspect, this application provides a computer program product. The computer program product includes program instructions, and when the program instructions are executed, the method in any one of the first aspect to the seventh aspect and the designs thereof is implemented.

According to a fourteenth aspect, this application further provides a chip. The chip is configured to implement the method in any one of the first aspect to the seventh aspect and the designs thereof.

According to a fifteenth aspect, this application provides a communication system. The communication system includes at least one communication apparatus in any one of the eighth aspect to the eleventh aspect and the designs thereof.

### BRIEF DESCRIPTION OF DRAWINGS

The accompanying drawings, which may be included in this specification and constitute a part of this specification, together with this specification show example embodiments, or features and aspects of this application, and are used to explain principles of this application. It is clear that the accompanying drawings in the following descriptions merely show some embodiments of this application, and a person of ordinary skill in the art can derive other drawings from these accompanying drawings without creative efforts.
FIG. 1 is a schematic diagram of a possible communication system according to this application;
FIG. 2 is a schematic diagram of an IAB donor according to an embodiment of this application;
FIG. 3 is a schematic diagram of a control plane protocol stack in an IAB network according to an embodiment of this application;
FIG. 4 is a schematic diagram of a user plane protocol stack in an IAB network according to an embodiment of this application;
FIG. 5 is a schematic diagram of IAB node networking according to an embodiment of this application;
FIG. 6A is a schematic diagram of a communication method according to an embodiment of this application;
FIG. 6B is a schematic diagram of a communication method according to an embodiment of this application;
FIG. 6C is a schematic diagram of a communication method according to an embodiment of this application;
FIG. 6D is a schematic diagram of a communication method according to an embodiment of this application;
FIG. 6E is a schematic diagram of a communication method according to an embodiment of this application;
FIG. 6F is a schematic diagram of a communication method according to an embodiment of this application;
FIG. 7 is a schematic diagram of a communication method according to an embodiment of this application;
FIG. 8 is a schematic diagram of a communication method according to an embodiment of this application;
FIG. 9 is a schematic block diagram of a communication apparatus according to an embodiment of this application;
FIG. 10 is a schematic block diagram of a communication apparatus according to an embodiment of this application;
FIG. 11 is a schematic block diagram of a communication apparatus according to an embodiment of this application;
FIG. 12 is a schematic block diagram of a communication apparatus according to an embodiment of this application; and
FIG. 13 is a schematic block diagram of an apparatus according to an embodiment of this application.

### DESCRIPTION OF EMBODIMENTS

Compared with a 4th generation mobile communication system or a long term evolution (long term evolution, LTE) system, a 5th generation (5G) mobile communication system or a new radio (new radio, NR) system imposes stricter requirements on various network performance indicators in an all-round way. For example, a capacity indicator is increased by 1000 times, wider coverage is required, and ultra-high reliability and ultra-low latency are required. In one aspect, in consideration of rich frequency resources on high-frequency carriers, networking using high-frequency small cells is increasingly popular in hotspot areas, to meet an ultra-high capacity requirement of 5G. The high-frequency carriers have a poor propagation characteristic, are severely attenuated due to blocking, and have small coverage. Therefore, a large quantity of small cells need to be densely deployed. Correspondingly, it is costly to provide fiber backhaul for the large quantity of densely deployed small cells, and construction is difficult. Therefore, an economical and convenient backhaul solution is required. In another aspect, from a perspective of a wide coverage requirement, it is difficult and costly to deploy optical fibers to provide network coverage in some remote areas. Therefore, a flexible and convenient access and backhaul solution also needs to be designed. A wireless backhaul device provides an idea for resolving the foregoing two problems. An access link (access link) and a backhaul link (backhaul link) of the wireless backhaul device each use a wireless transmission solution, to avoid optical fiber deployment. The wireless backhaul device may be a relay node (Relay Node, RN), an integrated access and backhaul (Integrated Access Backhaul, IAB) node, or another device that provides a wireless backhaul function. This is not limited in this application. In an IAB network, an IAB node (IAB node) serves as a wireless backhaul device, and may provide a wireless access service for user equipment (user equipment, UE). Service data of the UE is transmitted by the IAB node connecting to a donor node or a donor base station over a wireless backhaul link. An antenna can be shared by using the IAB node for access and backhaul, to reduce a quantity of antennas of a base station.

The following describes embodiments of this application with reference to the accompanying drawings. Features or content marked by dashed lines in the accompanying drawings may be understood as optional operations or optional structures in embodiments of this application.

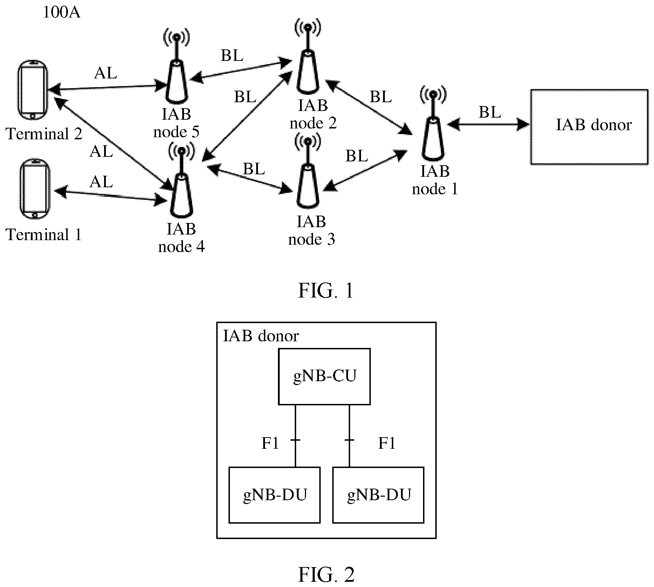

User equipment in FIG. 1 may be an access terminal device, a subscriber unit, a subscriber station, a mobile station, a remote station, a remote terminal device, a mobile device, a user terminal device, a wireless terminal device, a user agent, a user apparatus, or the like. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device (such as a smart watch or a smart band), smart furniture or a home appliance, a terminal device in a 5G network, a terminal device in a future evolved public land mobile network (public land mobile network, PLMN), a vehicle device in vehicle-to-everything (vehicle-to-everything, V2X), customer premises equipment (customer premises equipment, CPE), or the like. A specific implementation form of the user equipment is not limited in this application.

An IAB node in FIG. 1 may include a mobile termination (mobile termination, MT) and a distributed unit DU (distributed unit, DU). For a parent node of the IAB node, the IAB node may be considered as a terminal device, namely, a role of the MT. For a subordinate device of the IAB node (where the subordinate device may be another IAB child node or common UE), the IAB node may be considered as a network device, namely, a role of the DU. It should be understood that only the IAB node is used as an example for each node in FIG. 1, and each IAB node may be replaced with a common relay node (relay node, RN).

An IAB donor (IAB donor) in FIG. 1 may be a donor base station, and the IAB donor may be referred to as a DgNB (namely, a donor gNodeB) for short in a 5G network. The IAB donor may be a complete entity, or may exist in a form in which a central unit (central unit, CU) (Donor-CU or gNB-CU for short in this application) and a distributed unit (distributed unit, DU) (Donor-DU or gNB-DU for short in this application) are separated. As shown in FIG. 2, the IAB donor may be a gNB located in a 5G radio access network (5G radio access network, 5G RAN). The IAB donor may include the gNB-CU and the gNB-DU. The gNB-CU is connected to the gNB-DU through an F1 interface, and the F1 interface may further include a control plane interface (F1-C) and a user plane interface (F1-U). The CU is connected to a core network through a next generation (next generation, NG) interface. The gNB-CU or the donor-CU may alternatively exist in a form in which a user plane (user plane, UP) (CU-UP for short in this application) and a control plane (control plane, CP) (CU-CP for short in this application) are separated. In other words, the gNB-CU or the donor-CU includes the CU-CP and the CU-UP. One gNB-CU may include one gNB-CU-CP and at least one gNB-CU-UP. Alternatively, one donor-CU may include one donor-CU-CP and at least one donor-CU-UP.

The IAB node is connected to the core network via the IAB donor. For example, in a standalone (standalone, SA) 5G architecture, the IAB node is connected to a 5GC via the IAB donor. In a dual connectivity (dual connectivity, DC) or multi-connectivity (Multi-Connectivity, MC) 5G architecture (for example, in a non-standalone (non-standalone, NSA) or an NR-NR DC scenario), on a primary path, the IAB node may be connected to an evolved packet core (evolved packet core, EPC) via an evolved base station (evolved NodeB, eNB), or may be connected to the 5G core via the IAB donor.

To ensure service transmission reliability, in an IAB network, multi-hop IAB node networking and multi-connectivity IAB node networking are supported. Therefore, there may be a plurality of transmission paths between a terminal and an IAB donor. On one path, there is a determined hierarchical relationship between IAB nodes, and between an IAB node and an IAB donor connected to the IAB node. Each IAB node considers, as a parent node, a node providing a backhaul service for the IAB node. Correspondingly, each IAB node may be considered as a child node of the parent node of the IAB node.

For example, refer to FIG. 1. A parent node of an IAB node 1 is an IAB donor, the IAB node 1 is a parent node of an IAB node 2 and an IAB node 3, both the IAB node 2 and the IAB node 3 are parent nodes of an IAB node 4, and a parent node of an IAB node 5 is the IAB node 2. An uplink data packet of the terminal may be transmitted to the IAB donor via one or more IAB nodes, and a downlink data packet is sent by the IAB donor to the terminal via the one or more IAB nodes. There are two available paths for transmitting a data packet between a terminal 1 and the IAB donor: the terminal 1→the IAB node 4→the IAB node 3→the IAB node 1→the IAB donor, and the terminal 1→the IAB node 4→the IAB node 2→the IAB node 1→the IAB donor. There are three available paths for transmitting a data packet between a terminal 2 and the IAB donor: the terminal 2→the IAB node 4→the IAB node 3→the IAB node 1→the IAB donor, the terminal 2-the IAB node 4→the IAB node 2→the IAB node 1→the IAB donor, and the terminal 2-the IAB node 5→the IAB node 2→the IAB node 1→the IAB donor.

To ensure normal data transmission between the terminal and the IAB donor, the IAB donor needs to configure a routing table for each IAB node, in other words, configure next-hop nodes corresponding to different paths. In addition, the IAB donor needs to determine a transmission path corresponding to data transmission. In other words, a transmission path is determined before data transmission. The transmission path may be referred to as a primary path. Routing (routing) transmission is performed on data between the terminal and the IAB donor through the primary path, and another path may be referred to as a backup (backup) path. The backup path can be used for re-routing (re-routing) only when the primary path is unavailable, for example, when an RLF occurs on a link on the primary path. For example, as shown in FIG. 1, the IAB donor configures a primary path for data transmission of the terminal 2 as: the terminal 2→the IAB node 4→the IAB node 2→the IAB node 1→the IAB donor. When the IAB node 2 detects that the RLF occurs on a link between the IAB node 2 and the IAB node 1 and the link cannot be recovered, the IAB node 2 sends one piece of RLF indication information to the IAB node 4. Based on the indication information, the IAB node 4 may trigger data re-routing, and temporarily transmit, through the backup path, uplink data received from the terminal 2. To be specific, the path is: the terminal 2→the IAB node 4→the IAB node 3→the IAB node 1→the IAB donor.

To ensure stable data transmission between the terminal and the IAB donor, a radio link recovery (recovery) mechanism is introduced. To be specific, after the RLF occurs between two nodes, an attempt may be made to recover a radio link between the two nodes. For example, as shown in FIG. 1, after the RLF occurs between the IAB node 5 and the IAB node 2, the IAB node 5 may attempt to perform radio link recovery, for example, perform RRC re-establishment in another cell of the IAB node 2, to recover a radio link between the IAB node 5 and the IAB node 2.

Each intermediate IAB node on an uplink path from the IAB node to the IAB donor may be referred to as an upstream node (upstream node) of the IAB node. For example, both the IAB node 1 and the IAB node 2 in FIG. 1 may be referred to as upstream IAB nodes of the IAB node 5. Each intermediate IAB node on a downlink path from the IAB node to the terminal may be referred to as a downstream node of the IAB node. For example, the IAB node 2, the IAB node 3, the IAB node 4, and the IAB node 5 in FIG. 1 may all be referred to as downstream nodes (downstream nodes) of the IAB node 1. The downstream node includes a child node, a child node (or referred to as a grandchild node) of the child node, and the like. The downstream node may be another IAB node or a terminal. For example, the terminal 1 in FIG. 1 may be referred to as a downstream node of the IAB node 4, the IAB node 4 and the IAB node 5 may be referred to as downstream nodes of the IAB node 1, and the terminal 1 and the terminal 2 may be referred to as downstream nodes of the IAB node 1.

It may be understood that, in the IAB network, one transmission path between the terminal and the IAB donor may include one or more IAB nodes. Each IAB node needs to maintain a wireless backhaul link for a parent node, and further needs to maintain a radio link with a child node. If the child node of the IAB node is a terminal, a radio access link exists between the IAB node and the child node (namely, the terminal). If the child node of the IAB node is another IAB node, a wireless backhaul link exists between the IAB node and the child node (namely, the another IAB node). For example, refer to FIG. 1. On the path "the terminal 1→the IAB node 4→the IAB node 3→the IAB node 1→the IAB donor", the terminal 1 accesses the IAB node 4 through a radio access link, the IAB node 4 is connected to the IAB node 3 through a wireless backhaul link, the IAB node 3 is connected to the IAB node 1 through a wireless backhaul link, and the IAB node 1 is connected to the IAB donor through a wireless backhaul link.

The foregoing IAB networking scenario is merely an example. In an IAB scenario in which multi-hop and multi-connectivity are combined, there are more other possible IAB networking scenarios. For example, an IAB donor and an IAB node connected to another IAB donor form dual connectivity to serve a terminal. The networking scenarios are not listed one by one herein.

In this embodiment of this application, an access IAB node is an IAB node accessed by the terminal, and the intermediate IAB node is an IAB node that provides a wireless backhaul service for the terminal or the IAB node. For example, refer to FIG. 1. On the path "the terminal 1→the IAB node 4→the IAB node 3→the IAB node 1→the IAB donor", the IAB node 4 is an accessed IAB node, and the IAB node 3 and the IAB node 1 are intermediate IAB nodes. It should be noted that an IAB node is an access IAB node for a terminal that accesses the IAB node, and is an intermediate IAB node for a terminal that accesses another IAB node. Therefore, whether an IAB node is specifically an access IAB node or an intermediate IAB node is not fixed, and needs to be determined based on a specific application scenario.

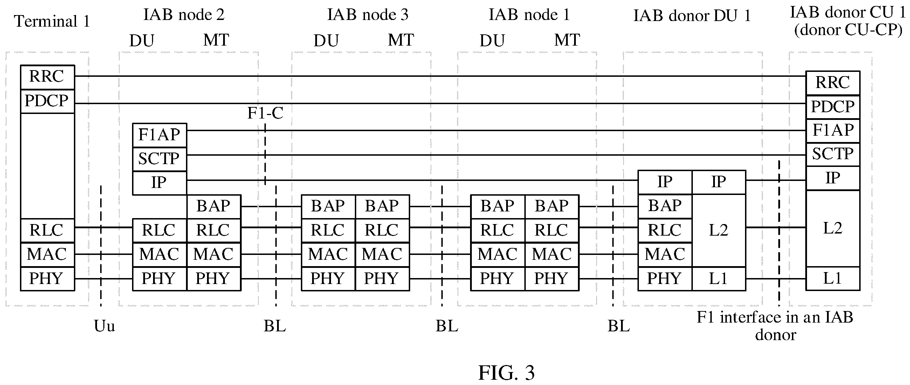

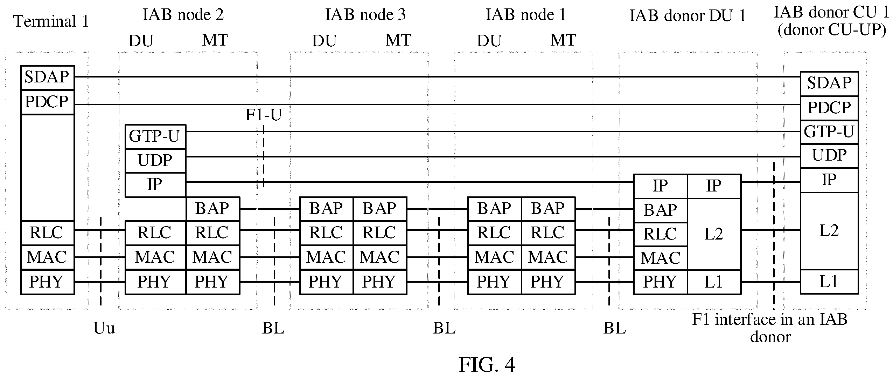

FIG. 3 and FIG. 4 are respectively a schematic diagram of a control plane protocol stack and a schematic diagram of a user plane protocol stack in an IAB network according to embodiments of this application. The following provides descriptions with reference to FIG. 3 and FIG. 4.

For a control plane, as shown in FIG. 3, a Uu interface is established between a terminal 1 and an IAB2-DU, and peer protocol layers include an RLC layer, a MAC layer, and a PHY layer. An F1-C interface is established between the IAB2-DU and an IAB donor CU 1, and peer protocol layers include an F1 application protocol (F1 application protocol, F1AP) layer and a stream control transmission protocol (stream control transmission protocol, SCTP) layer. An IAB donor DU 1 is connected to the IAB donor CU 1 in a wired manner, and peer protocol layers include an internet protocol IP (internet protocol) layer, an L2, and an L1. BLs are established between an IAB node 2 and an IAB node 3, between the IAB node 3 and an IAB node 1, and between the IAB node 1 and the IAB donor DU 1, and peer protocol layers include a backhaul adaptation protocol (Backhaul Adaptation Protocol, BAP) layer, an RLC layer, a MAC layer, and a PHY layer. In addition, peer RRC layers and peer PDCP layers are established between the terminal 1 and the IAB donor CU 1, and peer IP layers are established between the IAB2-DU and the IAB donor DU 1.

It can be learned that, compared with a control plane protocol stack of a single air interface, in the control plane protocol stack in the IAB network, a DU of an access IAB node implements functions (namely, functions of establishing a peer RLC layer, a peer MAC layer, and a peer PHY layer with the terminal and establishing a peer F1AP layer and a peer SCTP layer with a CU) of a gNB-DU of the single air interface. It may be understood that the DU of the access IAB node in the IAB network implements the function of the gNB-DU of the single air interface, and the IAB donor CU implements a function of a gNB-CU of the single air interface.

On the control plane, an RRC message is encapsulated in an F1AP message between the access IAB node and the IAB donor CU for transmission. Specifically, in an uplink direction, the terminal 1 encapsulates the RRC message in a PDCP protocol data unit (protocol data unit, PDU), and sends the PDCP protocol data unit to the IAB2-DU after processing is sequentially performed at the RLC layer, the MAC layer, and the PHY layer. The IAB2-DU obtains the PDCP PDU after processing is sequentially performed at the PHY layer, the MAC layer, and the RLC layer, encapsulates the PDCP PDU in the F1AP message, and obtains an IP packet after processing is sequentially performed at the SCTP layer and the IP layer. An IAB2-MT sends the IP packet to an IAB3-DU after processing is separately performed at the BAP layer, the RLC layer, the MAC layer, and the PHY layer. The IAB3 -DU obtains the IP packet after processing is sequentially performed at the PHY layer, the MAC layer, the RLC layer, and the BAP layer. Then, an IAB3-MT sends the IP packet to an IAB1-DU by using an operation similar to that of the IAB2-MT. Similarly, an IAB1-MT sends the IP packet to the IAB donor DU 1. After obtaining the IP packet through parsing, the IAB donor DU 1 sends the IP packet to the IAB donor CU 1. The IAB donor CU 1 obtains the RRC message after processing is sequentially performed on the IP packet at the SCTP layer, the F1AP layer, and the PDCP layer. Operations in a downlink direction are similar. Details are not described herein again.

For a user plane, as shown in FIG. 4, a Uu interface is established between a terminal 1 and an IAB2-DU, and peer protocol layers include an RLC layer, a MAC layer, and a PHY layer. An F1-U interface is established between the IAB2-DU and an IAB donor CU 1, and peer protocol layers include a GPRS tunnelling protocol for the user plane (GPRS tunnelling protocol for the user plane, GTP-U) layer and a user datagram protocol (user datagram protocol, UDP) layer. An IAB donor DU 1 is connected to the IAB donor CU 1 in a wired manner, and peer protocol layers include an IP layer, an L2, and an L1. BLs are established between an IAB node 2 and an IAB node 3, between the IAB node 3 and an IAB node 1, and between the IAB node 1 and the IAB donor DU 1, and peer protocol layers include a BAP layer, an RLC layer, a MAC layer, and a PHY layer. In addition, peer SDAP layers and peer PDCP layers are established between the terminal 1 and the IAB donor CU 1, and peer IP layers are established between the IAB2-DU and the IAB donor DU 1.

It can be learned that, compared with a user plane protocol stack of a single air interface, in the user plane protocol stack in the IAB network, a DU of an access IAB node implements some of functions (namely, functions of establishing a peer RLC layer, a peer MAC layer, and a peer PHY layer with the terminal and establishing a peer GTP-U layer and a peer UDP layer with the IAB donor CU 1) of a gNB-DU of the single air interface. It may be understood that the DU of the access IAB node implements the function of the gNB-DU of the single air interface, and the IAB donor CU implements a function of a gNB-CU of the single air interface.

On the user plane, a PDCP data packet is encapsulated in a GTP-U tunnel between the access IAB node and the IAB donor CU for transmission. The GTP-U tunnel is established on the F1-U interface.

FIG. 3 and FIG. 4 are described by using the protocol stacks in the IAB scenario shown in FIG. 1 as examples. It should be noted that one IAB node may play one or more roles. The IAB node may have one or more protocol stacks of the one or more roles. Alternatively, the IAB node may have one protocol stack, and for different roles of the IAB node, protocol layers corresponding to different roles in the protocol stacks may be used for processing. The following provides descriptions by using an example in which the IAB node has the protocol stacks of the one or more roles.

### (1) Protocol stack of a common terminal

When accessing the IAB network, the IAB node may play a role of a common terminal. In this case, an MT of the IAB node has a protocol stack of the common terminal, for example, the protocol stack, namely, the RRC layer, the PDCP layer, the RLC layer, the MAC layer, and the PHY layer of the terminal 1 in FIG. 3 and FIG. 4. On a control plane, an RRC message of the IAB node is encapsulated in an F1AP message between a parent node of the IAB node and an IAB donor CU for transmission. On a user plane, a PDCP data packet of the IAB node is encapsulated in a GTP-U tunnel between a parent node of the IAB node and an IAB donor CU for transmission.

In addition, after the IAB node accesses the IAB network, the IAB node may still play a role of the common terminal, for example, transmit an uplink data packet and/or a downlink data packet (for example, an OAM data packet) of the IAB node with an IAB donor, and perform measurement through the RRC layer.

### (2) Protocol stack of an access IAB node

After the IAB node accesses the IAB network, the IAB node may provide an access service for a terminal, to play a role of an access IAB node. In this case, the IAB node has a protocol stack of the access IAB node, for example, the protocol stack of the IAB node 2 in FIG. 3 and FIG. 4.

In this case, there may be two protocol stacks on an interface of the IAB node for a parent node of the IAB node. One is a protocol stack of a common terminal, and the other is a protocol stack (namely, the protocol stack of the access IAB node) that provides a backhaul service for the terminal. Optionally, same protocol layers of the two protocol stacks may be shared. For example, the two protocol stacks correspond to a same RLC layer, a same MAC layer, a same PHY layer, or a same BAP layer.

### (3) Protocol stack of an intermediate IAB node

After the IAB node accesses the IAB network, the IAB node may play a role of an intermediate IAB node. In this case, the IAB node has a protocol stack of the intermediate IAB node, for example, the protocol stack of the IAB node 3 or the IAB node 1 in FIG. 3 and FIG. 4.

In this case, there may be two protocol stacks on an interface of the IAB node for a parent node of the IAB node. One is a protocol stack of a common terminal, and the other is a protocol stack (namely, the protocol stack of the intermediate IAB node) that provides a backhaul service for an IAB child node. Optionally, same protocol layers of the two protocol stacks may be shared. For example, the two protocol stacks correspond to a same RLC layer, a same MAC layer, a same PHY layer, or a same BAP layer.

In addition, the IAB node may play roles of an access IAB node and an intermediate IAB node at the same time. For example, the IAB node may be an access IAB node for some terminals and an intermediate IAB node for other terminals. In this case, the IAB node may have three protocol stacks: One is the protocol stack of the common terminal, one is the protocol stack of the access IAB node, and one is the protocol stack of the intermediate IAB node. Optionally, same protocol layers of the three protocol stacks may be shared. For example, the three protocol stacks correspond to a same RLC layer, a same MAC layer, a same PHY layer, or a same BAP layer.

It should be noted that FIG. 3 and FIG. 4 are described by using the IAB network as an example. Content in FIG. 3 and FIG. 4 is also applicable to another type of relay network other than the IAB network. For a control plane protocol stack architecture of the relay network, refer to FIG. 3. For a user plane protocol stack architecture of the relay network, refer to FIG. 4. The IAB node in FIG. 3 and FIG. 4 may be replaced with a relay (relay). For example, the IAB node 2 may be replaced with a relay node 2, the IAB node 3 may be replaced with a relay node 3, the IAB node 1 may be replaced with a relay node 1, and the IAB donor 1 may be replaced with a donor node 1. The donor node has a protocol stack including the CU and the DU. Other content is the same as the content described in FIG. 3 and FIG. 4. For details, refer to the descriptions in FIG. 3 and FIG. 4. Details are not described herein again.

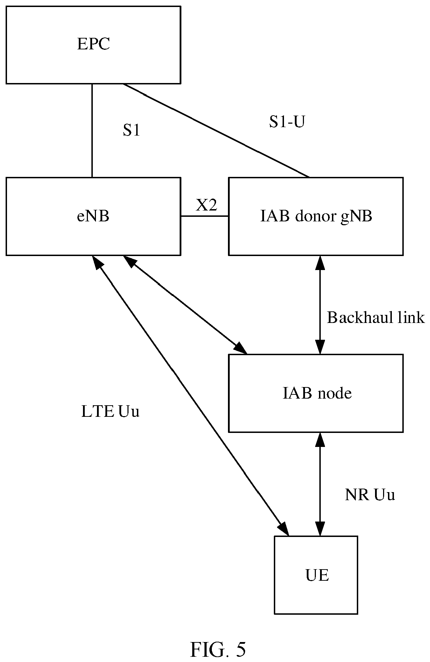

The IAB network shown in FIG. 1 may be considered as a schematic diagram of IAB standalone networking, and the IAB network further supports non-standalone (non-standalone, NSA) networking. FIG. 5 is a schematic diagram of IAB non-standalone networking. An IAB node supports dual connectivity, namely, EN-DC (E-UTRAN NR dual connectivity) of 4G and 5G networks, and an LTE base station eNB is a master base station (master eNB, MeNB), which provides an LTE air interface (LTE Uu) connection for the IAB node, and establishes an S1 interface with a 4G core network evolved packet core (evolved packet core, EPC) for user plane and control plane transmission. An IAB donor is a secondary base station/a secondary donor node, which provides an NR air interface (NR Uu) connection for the IAB node, and establishes the S 1 interface with the core network EPC for user plane transmission. Similarly, UE also supports EN-DC. The UE is connected to the master base station eNB through an LTE Uu interface, accesses the IAB node through an NR Uu interface, and is connected to the secondary base station/the secondary donor node IAB donor via the IAB node. The IAB non-standalone networking scenario in this application may also be referred to as an IAB EN-DC networking scenario. When the UE or the IAB node changes the secondary base station/the secondary donor node, the secondary base station/the secondary donor node before the change may be referred to as a source secondary base station/a source secondary donor node, and a changed secondary base station/a changed secondary donor node may be referred to as a target secondary base station/a target secondary donor node.

It should be understood that FIG. 5 is only an example of networking, and the NSA scenario of the IAB network also supports multi-hop IAB networking. For example, the UE in FIG. 5 may be another IAB node. In other words, the IAB node may be connected to the IAB donor through a multi-hop wireless backhaul link. This is not limited in this application. The NSA scenario of the IAB network also supports NR-NR DC. For example, in FIG. 5, the master base station eNB may alternatively be a master donor node IAB donor. In other words, the IAB node may also support dual connectivity of 5G and 5G networks. In this application, an MT of the IAB node may be referred to as an IAB-MT for short, a DU of the IAB node may be referred to as an IAB-DU for short, a CU of the IAB donor may be referred to as a donor-CU for short, and a DU of the IAB donor may be referred to as a donor-DU for short.

In this application, the IAB donor connected to the IAB node may be referred to as an IAB donor of the IAB node for short. The IAB node may directly access the IAB donor, or the IAB node may be connected to the IAB donor via another IAB node.

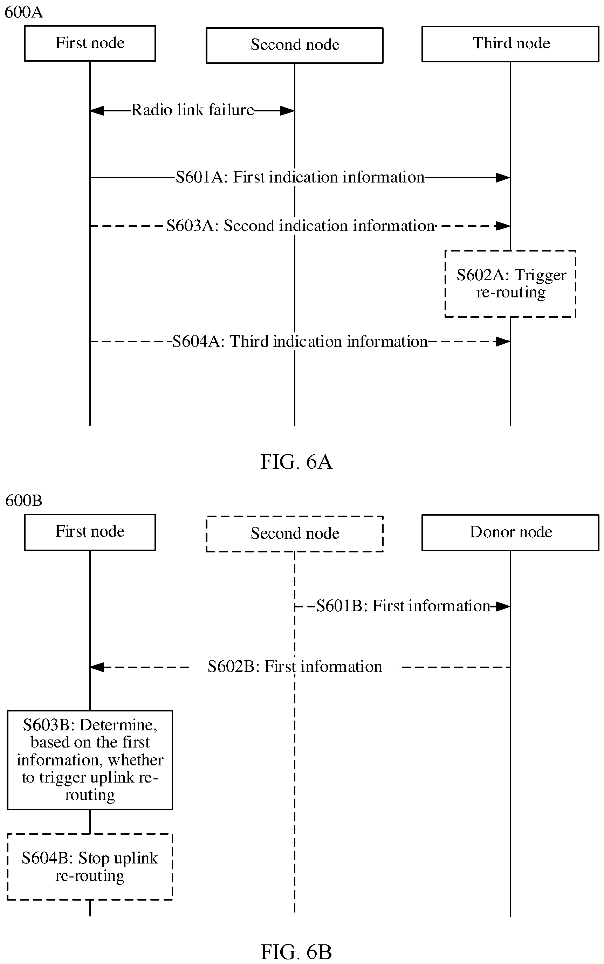

FIG. 6A shows a communication method 600A according to an embodiment of this application.

As shown in FIG. 6A, a first node may be a child node of a second node, the first node is a parent node of a third node, and a destination node may be a donor node. Alternatively, as shown in FIG. 6A, a first node may be a parent node of a second node, the first node is a child node of a third node, and a destination node may be an access node (which may also be referred to as a node accessed by a terminal device) of the terminal device. In FIG. 6A, the second node may be located between the first node and a master base station/a master donor node of the first node, or between the first node and a secondary donor node of the first node; the second node is a master base station/a master donor node of the first node; or the second node is a secondary donor node of the first node. The master base station/the master donor node or the secondary donor node may be understood with reference to the embodiment corresponding to FIG. 5.

At least one relay node may be included between the second node and the destination node, or the second node may be directly connected to the destination node. The communication method 600A includes the following steps.

S601A: The first node sends first indication information to the third node.

The first indication information may indicate a radio link exception. For example, the first indication information may indicate a radio link failure, or the first indication information may indicate that a link recovery attempt is being made.

For example, the first node may send the first indication information to the third node when determining that the RLF occurs on a radio link between the first node and the second node. In this case, the first indication information may indicate the radio link failure.

For example, the first node may send the first indication information to the third node when determining that the RLF occurs on a radio link between the first node and the second node, and the radio link recovery (recovery) attempt is being made. In this case, the first indication information may indicate that the link recovery attempt is being made.

For example, the first node may send the first indication information to the third node when determining that the RLF occurs on a radio link between the first node and the second node, and there is no other available path between the first node and the destination node. In this case, the first indication information may indicate the radio link failure.

For example, the first node may send the first indication information to the third node when determining that the RLF occurs on a radio link between the first node and the second node, the radio link recovery (recovery) attempt is being made, and there is no other available path between the first node and the destination node. In this case, the first indication information may indicate that the link recovery attempt is being made.

The first indication information may be carried in a backhaul adaptation protocol layer (backhaul adaptation protocol, BAP) control protocol data unit (control protocol data unit, control PDU) for sending.

S602A: After receiving the first indication information, the third node triggers re-routing.

For example, after receiving the first indication information, the third node re-routes (re-routes) a data packet to be sent to the destination node. Re-routing the data packet to be sent to the destination node means routing data to the destination node through another path. The another path may also be referred to as a backup (backup) path, namely, a path different from an original path on which the third node routes data to the destination node via the first node before the RLF occurs.

For example, if the first node sends the first indication information to the third node when the RLF occurs on the radio link between the first node and the second node, or when the RLF occurs on the radio link between the first node and the second node, and the radio link recovery attempt is being made, through the foregoing operations S601A and S602A, the third node can trigger a re-routing function of the data packet after receiving the first indication information, to be specific, re-route the data packet to be sent to the destination node, and route the data packet to the destination node through another available path.

For example, if the first node sends the first indication information to the third node when the RLF occurs on the radio link between the first node and the second node, and there is no other available path between the first node and the destination node, or when the RLF occurs on the radio link between the first node and the second node, the radio link recovery attempt is being made, and there is no other available path between the first node and the destination node, through the foregoing operations S601A and S602A, the third node can trigger a re-routing operation of the data packet after receiving the first indication information, and a re-routing function of the first node can be fully utilized, to improve data relay stability and reduce overheads of air interface signaling. For example, there are a plurality of paths between the first node and the destination node. When the RLF occurs on one of the paths, the first node may trigger the re-routing function, and route data to the destination node through another path. In this case, the first indication information may not need to be sent to the third node. Otherwise, unnecessary re-routing may be performed by the third node, causing a waste of resources, and also causing transmission of a large amount of first indication information over an air interface.

Optionally, this embodiment of this application may further include the following operation.

S603A: The first node sends second indication information to the third node.

The second indication information indicates that a path that passes through the first node to the destination node is unavailable.

For example, the second indication information includes a BAP address (address) of the destination node. Specifically, for uplink transmission, the BAP address of the destination node may be a BAP address of a donor-DU. For downlink transmission, the BAP address of the destination node may be a BAP address of an access IAB node. In this case, that the second indication information indicates that a path that passes through the first node to the destination node is unavailable may mean that all paths that pass through the first node to the destination node are unavailable.

For example, the second indication information includes a path identity (path identity, Path ID) corresponding to the path that passes through the first node to the destination node, or a path identity corresponding to a path from the first node to the destination node. In this case, that the second indication information indicates that a path that passes through the first node to the destination node is unavailable may mean that a path whose corresponding path ID is equal to the path ID included in the second indication information is unavailable in all paths that pass through the first node to the destination node.

For example, the second indication information includes a routing identity (routing identity, routing ID) corresponding to the path that passes through the first node to the destination node, or a routing identity corresponding to a path from the first node to the destination node. The routing identity includes the BAP address of the destination node and the path ID. Further, if there are a plurality of paths between the first node and the destination node, when the RLF occurs on one or more of the paths, the second indication information may include one or more routing identities. In this case, that the second indication information indicates that a path that passes through the first node to the destination node is unavailable may mean that a path whose corresponding routing ID is equal to the routing ID included in the second indication information is unavailable in all paths that pass through the first node to the destination node. Alternatively, in this case, that the second indication information indicates that a path that passes through the first node to the destination node is unavailable may mean that all paths that pass through the first node to the destination node are unavailable.

Correspondingly, the third node receives the second indication information.

For example, when the second indication information includes the BAP address (address) of the destination node, the third node may determine, based on the second indication information, to route data to the destination node through another path. The another path does not include the first node.

For example, when the second indication information includes the routing identity corresponding to the path that passes through the first node to the destination node (or the routing identity corresponding to the path from the first node to the destination node), the third node may determine, based on the second indication information, to route data to the destination node through another path. A routing ID of the another path is not equal to the routing ID included in the second indication information. Alternatively, the another path does not include the first node.

The third node may determine, based on the second indication information, to re-route (re-route) only the data packet to be sent to the destination node. In other words, the third node may determine not to re-route a data packet to be sent to another destination node, and the data packet may still be routed via the first node.

For example, when the second indication information includes the path identity corresponding to the path that passes through the first node to the destination node (or the path identity corresponding to the path from the first node to the destination node), the donor node may determine, based on the second indication information, to route data to the destination node through another path. A path identity of the another path is not equal to the path ID included in the second indication information.

The first indication information and the second indication information may be carried in a same message, for example, carried in a same BAP control PDU, and sent to the third node. The first indication information and the second indication information may be same indication information. In other words, the indication information has both a function of the first indication information and a function of the second indication information.

Operation S603A is an optional operation. To be specific, the first node may not send the second indication information to the third node. For example, after receiving the first indication information, the third node determines to route data to the destination node through another path. The another path does not include the first node.

Through the foregoing operation S603A, the third node can obtain more accurate information about the RLF, to implement more efficient and accurate re-routing. For example, the third node may not only route data to the destination node via the first node, but also route other data to another destination node via the first node. Further, there may be a plurality of paths between the first node and the destination node. In these cases, the third node may perform more efficient and accurate re-routing based on the first indication information and the second indication information.

Optionally, this embodiment of this application may further include the following operation.

S604A: The first node sends third indication information to the third node.

The third indication information indicates that radio link recovery succeeds. The first node may send the third indication information to the third node when successfully recovering a link between the first node and a parent node, for example, when successfully recovering a link between the first node and the second node, or accessing a new parent node through an RRC re-establishment procedure.

Correspondingly, the third node receives the third indication information.

In a possible implementation, after receiving the third indication information, the third node disables the re-routing function, to be specific, stops routing data to the destination node through another path (a backup path), and continues to route the data to the destination node through a source path (namely, an original primary path). For example, the third node continues to route the data to the first node, and the first node further routes the data to the destination node.

In another possible implementation, after receiving the third indication information, the third node does not disable the re-routing function, but continues to route data to the destination node through another path (a backup path) until an IAB donor configures a new routing configuration.

Through the foregoing operation S604A, the third node can stop re-routing (or disable the re-routing function) in time, to reduce processing complexity of an upstream node or a downstream node of the third node.

It should be noted that, when the first node is a child node of the third node and is a parent node of the second node, the first indication information may only indicate the radio link failure. When the first node is a parent node of the third node and is a child node of the second node, the first indication information may indicate the radio link failure, or the first indication information may indicate that the link recovery attempt is being made.

In this embodiment of this application, the first node, the second node, or the third node may be an IAB node, the donor node may be an IAB donor, and the access node of the terminal device may be an access IAB node.

FIG. 6B shows a communication method 600B according to an embodiment of this application. As shown in FIG. 6B, a second node is an upstream node of a first node (where for example, the second node is a parent node of the first node), and a donor node is a donor node connected to the first node and the second node. At least one relay node may be included between the second node and the donor node, or the second node may be directly connected to the donor node (where it may be understood that the donor node is a parent node of the second node). This embodiment of this application may be applied to a scenario in which the first node sends an uplink data packet to a destination node via the second node. The destination node may be the donor node. The communication method 600B includes the following steps.

S601B: The second node sends first information to the donor node.
(1) In a possible implementation, the first information may include a first threshold.
   For example, the first information may indicate to trigger uplink re-routing when a quantity of transmission/retransmission times of a data packet of the first node reaches/exceeds the first threshold. The data packet of the first node may be any data packet at a BAP layer, an RLC layer, a MAC layer, or a PHY layer.
   Specifically, the first information may indicate to trigger uplink re-routing when a quantity of transmission/retransmission times of a BAP layer data packet (for example, a BAP PDU) of the first node is greater than or equal to the first threshold. Alternatively, the first information may indicate to trigger uplink re-routing when a quantity of transmission/retransmission times of an RLC layer data packet (for example, an RLC PDU) of the first node is greater than or equal to the first threshold. The first threshold is less than a maximum retransmission threshold of the RLC layer, and the maximum retransmission threshold of the RLC layer may be used by the first node to determine whether an RLF occurs on a link between the first node and the second node. The maximum retransmission threshold of the RLC layer may be sent by the donor node to the first node by using an RRC message. Alternatively, the first information may indicate to trigger uplink re-routing when a quantity of transmission/retransmission times of a MAC layer data packet (for example, a MAC PDU, which may also be referred to as a transport block (transport block, TB)) of the first node is greater than or equal to the first threshold. Alternatively, the first information may indicate to trigger uplink re-routing when a quantity of transmission/retransmission times of a PHY layer data packet (for example, a code block group (code block group, CBG)) of the first node is greater than or equal to the first threshold.
(2) In another possible implementation, the first information may include a configuration of a first timer, and the configuration of the first timer may include first timer duration.

For example, the first information may indicate to trigger uplink re-routing when the first timer expires and a data packet of the first node has not been successfully sent. The data packet of the first node may be any data packet at a BAP layer, an RLC layer, a MAC layer, or a PHY layer.

Specifically, the first information may indicate to trigger uplink re-routing when the first timer expires (to be specific, timing duration of the first timer reaches/exceeds the configured first timer duration) and a BAP layer data packet of the first node has not been successfully sent. Alternatively, the first information may indicate to trigger uplink re-routing when the first timer expires and an RLC layer data packet of the first node has not been successfully sent. The first timer duration needs to meet the following requirement: Before the first timer expires, a quantity of transmission/retransmission times of the RLC layer data packet of the first node is less than a maximum retransmission threshold of the RLC layer. Alternatively, the first information may indicate to trigger uplink re-routing when the first timer expires and a MAC layer data packet of the first node has not been successfully sent. Alternatively, the first information may indicate to trigger uplink re-routing when the first timer expires and a PHY layer data packet of the first node has not been successfully sent.

In this embodiment of this application, the first node or the second node may be an IAB node (where for example, the first node may be an access IAB node, and the second node may be an intermediate IAB node), and the donor node may be an IAB donor. For example, the second node may send the first information to a CU of the IAB donor by using an RRC message or an F1AP message.

S602B: The donor node sends the first information to the first node.

For example, S602B may be that the CU of the IAB donor sends the first information to an MT of the first node by using the RRC message, or may be that the CU of the IAB donor sends the first information to a DU of the first node by using the F1AP message.

S601B is an optional step. For example, the first information may be generated by the donor node and then sent to the first node. For another example, the second node may be optional. To be specific, the first node may be directly connected to the donor node (where in other words, the donor node is a parent node of the first node). After generating the first information, the donor node may directly send the first information to the first node.

S601B and S602B are optional steps. In a possible implementation, the first information may not need to be forwarded by the donor node. For example, the second node may include the first information in a BAP control PDU or a media access control control element (media access control control element, MAC CE), and send the BAP control PDU or the media access control control element to the first node through a wireless backhaul link between the first node and the second node. In another possible implementation, the first information may be generated by the first node. For example, the first node may generate the first information according to a protocol specification, the first information may be pre-configured in the first node, or the first node may generate the first information based on a parameter such as quality of a channel between the first node and the second node.

S603B: The first node determines, based on the first information, whether to trigger uplink re-routing.
(1) If the first information includes the first threshold, the first node triggers uplink re-routing when determining that the quantity of transmission/retransmission times of the BAP layer/RLC layer/MAC layer/PHY layer data packet is greater than or equal to the first threshold.
   For example, the first node triggers uplink re-routing when detecting that the quantity of transmission/retransmission times of the BAP layer data packet is greater than or equal to the first threshold. Alternatively, the first node triggers uplink re-routing when detecting that the quantity of transmission/retransmission times of the RLC layer data packet is greater than or equal to the first threshold. Alternatively, the first node triggers uplink re-routing when detecting that the quantity of transmission/retransmission times of the MAC layer data packet is greater than or equal to the first threshold. Alternatively, the first node triggers uplink re-routing when detecting that the quantity of transmission/retransmission times of the uplink PHY layer data packet is greater than or equal to the first threshold.
(2) If the first information includes the configuration of the first timer, the first node triggers uplink re-routing when determining that the first timer expires and the BAP layer/RLC layer/MAC layer/PHY layer data packet of the first node has not been successfully sent.

For example, the first node may start the timer when the BAP layer/RLC layer/MAC layer/PHY layer data packet is transmitted for the first time, that is, the first timer starts timing.

For example, uplink re-routing is triggered when the first timer expires and the BAP layer data packet of the first node has not been successfully sent. Alternatively, uplink re-routing is triggered when the first timer expires and the RLC layer data packet of the first node has not been successfully sent. Alternatively, uplink re-routing is triggered when the first timer expires and the MAC layer data packet of the first node has not been successfully sent. Alternatively, uplink re-routing is triggered when the first timer expires and the PHY layer data packet of the first node has not been successfully sent.

In the foregoing (1) and (2), the quantity of transmission/retransmission times of the BAP layer/RLC layer/MAC layer/PHY layer data packet may be counted based on a granularity of a next-hop node or counted based on a next-hop link. To be specific, the quantity of transmission/retransmission times of the BAP layer/RLC layer/MAC layer/PHY layer data packet may be a total quantity of times that the first node transmits or retransmits the BAP layer/RLC layer/MAC layer/PHY layer data packet to the parent node (the second node or the donor node), or a total quantity of times that the first node transmits or retransmits the BAP layer/RLC layer/MAC layer/PHY layer data packet on a link between the first node and the parent node (the second node or the donor node).

For example, triggering uplink re-routing may be understood as: The first node routes a data packet to the donor node through another path (namely, a backup path, where the backup path may not include the second node) or via another node (where the another node is not the second node). When the parent node of the first node is the second node, the data packet is no longer routed to the donor node via the second node. When the parent node of the first node is the donor node, the data packet is no longer directly routed to the donor node.

S604B: The first node stops uplink re-routing.

For example, after the first node triggers uplink re-routing, and before the first node determines that the RLF occurs between the first node and the second node/the donor node, if the data packet is successfully transmitted through a source path, the first node stops uplink re-routing.

Optionally, after the first node triggers uplink re-routing, and before the first node determines that the RLF occurs between the first node and the second node/the donor node, if the first node determines, through measurement, that quality of the link between the first node and the second node/the donor node is greater than a preset value, the first node may stop uplink re-routing.

Optionally, after triggering uplink re-routing, the first node starts a timer. When the timer expires, and the first node has not determined that the RLF occurs between the first node and the second node/the donor node, the first node may stop uplink re-routing.

For example, stopping uplink re-routing may be understood as: The first node stops routing data to the donor node through another path (namely, a backup path, where the backup path may not include the second node) or via another node (where the another node is not the second node), and continues to route the data to the donor node through a source path (namely, an original primary path, where the primary path includes the second node) or via the second node. When the parent node of the first node is the second node, the data packet continues to be routed to the donor node via the second node. When the parent node of the first node is the donor node, the data packet continues to be directly routed to the donor node.

S604B is an optional step. For example, the first node may not stop uplink re-routing until the donor node re-configures a new uplink route configuration for the first node.

According to this embodiment of this application, the first node can perform more efficient and accurate re-routing. In one aspect, the first node can flexibly trigger re-routing under the configuration of the donor node. In another aspect, re-routing of the first node may be triggered in advance before the link RLF occurs, to reduce possible data transmission interruptions and improve data transmission stability.

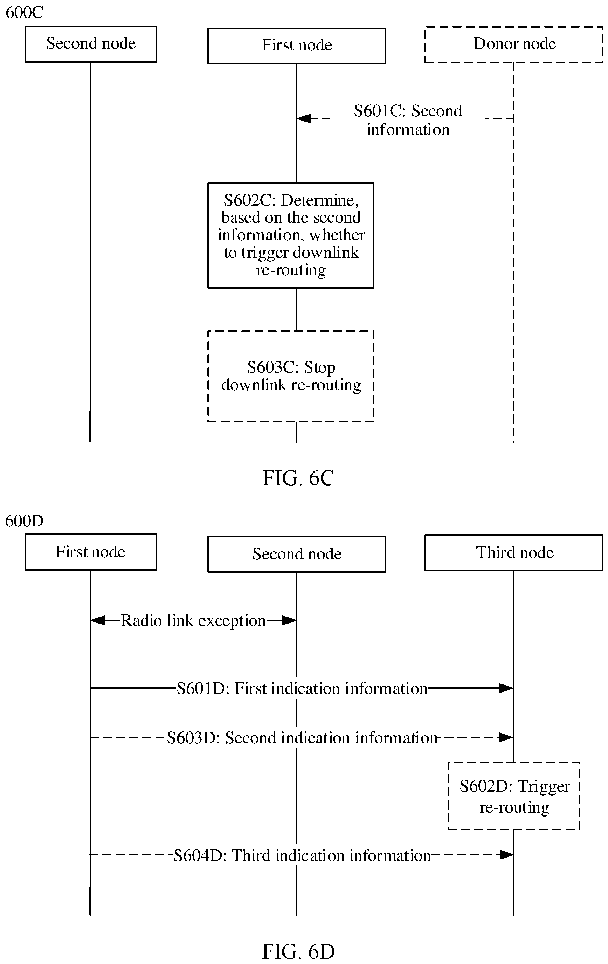

FIG. 6C shows a communication method 600C according to an embodiment of this application. As shown in FIG. 6C, a first node is a parent node of a second node. The first node is directly or indirectly connected to a donor node, or the first node is the donor node. This embodiment of this application may be applied to a scenario in which the first node sends a downlink data packet to a destination node via the second node. The destination node may be an access node of a terminal device. At least one relay node may be included between the second node and the destination node, the second node may be a parent node of the destination node, or the second node may be the destination node (where in this case, this embodiment of this application may be applied to a scenario in which the first node sends the downlink data packet to the second node). The communication method 600C includes the following steps.

S601C: The donor node sends second information to the first node.
(1) In a possible implementation, the second information may include a second threshold.
   For example, the second information may indicate to trigger downlink re-routing when a quantity of transmission/retransmission times of a data packet of the first node reaches/exceeds the second threshold. The data packet of the first node may be any data packet at a BAP layer, an RLC layer, a MAC layer, or a PHY layer.
   Specifically, the second information may indicate to trigger downlink re-routing when a quantity of transmission/retransmission times of a BAP layer data packet of the first node is greater than or equal to the second threshold. Alternatively, the second information may indicate to trigger downlink re-routing when a quantity of transmission/retransmission times of an RLC layer data packet of the first node is greater than or equal to the second threshold. The second threshold is less than a maximum retransmission threshold of the RLC layer, and the maximum retransmission threshold of the RLC layer may be used by the first node to determine whether a radio link failure occurs on a link between the first node and the second node. The maximum retransmission threshold of the RLC layer may be sent by the donor node to the first node by using an RRC message. Alternatively, the second information may indicate to trigger downlink re-routing when a quantity of transmission/retransmission times of a MAC layer data packet of the first node is greater than or equal to the second threshold. Alternatively, the second information may indicate to trigger downlink re-routing when a quantity of transmission/retransmission times of a PHY layer data packet of the first node is greater than or equal to the second threshold.
(2) In another possible implementation, the second information may include a configuration of a second timer, and the configuration of the second timer may include second timer duration.

For example, the second information may indicate to trigger downlink re-routing when the second timer expires and a data packet of the first node has not been successfully sent. The data packet of the first node may be any data packet at a BAP layer, an RLC layer, a MAC layer, or a PHY layer.

Specifically, the second information may indicate to trigger downlink re-routing when the second timer expires (to be specific, timing duration of the second timer reaches/exceeds the configured second timer duration) and a BAP layer data packet of the first node has not been successfully sent. Alternatively, the second information may indicate to trigger downlink re-routing when the second timer expires and an RLC layer data packet of the first node has not been successfully sent. The second timer duration needs to meet the following requirement: Before the second timer expires, a quantity of transmission/retransmission times of the RLC layer data packet of the first node is less than a maximum retransmission threshold of the RLC layer. Alternatively, the second information may indicate to trigger downlink re-routing when the second timer expires and a MAC layer data packet of the first node has not been successfully sent. Alternatively, the second information may indicate to trigger downlink re-routing when the second timer expires and a PHY layer data packet of the first node has not been successfully sent.

In this embodiment of this application, the first node or the second node may be an IAB node (where for example, the first node may be an intermediate IAB node, and the second node may be an access IAB node), and the donor node is an IAB donor. For example, S601C may be that a CU of the IAB donor sends the second information to an MT of the first node by using an RRC message. Alternatively, a CU of the IAB donor may send the second information to a DU of the first node by using an F1AP message.

S601C is an optional step. For example, the second information may be generated by the first node. For example, the first node may generate the second information according to a protocol specification, the second information may be pre-configured in the first node, or the first node may generate the second information based on quality of a channel between the first node and the second node. For another example, the first node is the donor node, and the first node includes a DU of the donor node and a CU of the donor node. The second information may be sent by the CU of the donor node to the DU of the donor node, or generated by the DU of the donor node.

S602C: The first node determines, based on the second information, whether to trigger downlink re-routing.
(1) If the second information includes the second threshold, the first node triggers downlink re-routing when determining that the quantity of transmission/retransmission times of the BAP layer/RLC layer/MAC layer/PHY layer data packet is greater than or equal to the second threshold.
   For example, the first node triggers downlink re-routing when detecting that the quantity of transmission/retransmission times of the BAP layer data packet is greater than or equal to the second threshold. Alternatively, the first node triggers downlink re-routing when detecting that the quantity of transmission/retransmission times of the RLC layer data packet is greater than or equal to the second threshold. Alternatively, the first node triggers downlink re-routing when detecting that the quantity of transmission/retransmission times of the MAC layer data packet is greater than or equal to the second threshold. Alternatively, the first node triggers downlink re-routing when detecting that the quantity of transmission/retransmission times of the downlink PHY layer data packet is greater than or equal to the second threshold.
(2) If the second information includes the configuration of the second timer, the first node triggers downlink re-routing when determining that the second timer expires and the BAP layer/RLC layer/MAC layer/PHY layer data packet has not been successfully sent.

For example, the first node may start the timer when the BAP layer/RLC layer/MAC layer/PHY layer data packet is transmitted for the first time, that is, the second timer starts timing.

For example, downlink re-routing is triggered when the second timer expires and the BAP layer data packet of the first node has not been successfully sent. Alternatively, downlink re-routing is triggered when the second timer expires and the RLC layer data packet of the first node has not been successfully sent. Alternatively, downlink re-routing is triggered when the second timer expires and the MAC layer data packet of the first node has not been successfully sent. Alternatively, downlink re-routing is triggered when the second timer expires and the PHY layer data packet of the first node has not been successfully sent.

In the foregoing (1) and (2), the quantity of transmission/retransmission times of the BAP layer/RLC layer/MAC layer/PHY layer data packet may be counted based on a granularity of a next-hop node or counted based on a next-hop link. To be specific, the quantity of transmission/retransmission times of the BAP layer/RLC layer/MAC layer/PHY layer data packet may be a total quantity of times that the first node transmits or retransmits the BAP layer/RLC layer/MAC layer/PHY layer data packet to the second node, or a total quantity of times that the first node transmits or retransmits the BAP layer/RLC layer/MAC layer/PHY layer data packet on the link between the first node and the second node.

For example, triggering downlink re-routing may be understood as: The first node routes a data packet to the destination node through another path (namely, a backup path, where the backup path may not include the second node) or via another node (where the another node is not the second node).

S603C: The first node stops downlink re-routing.

Optionally, after the first node triggers downlink re-routing, and before the first node determines that the RLF occurs between the first node and the second node, if the data packet is successfully transmitted through a source path, the first node stops downlink re-routing.

Optionally, after the first node triggers downlink re-routing, and before the first node determines that the RLF occurs between the first node and the second node, if the first node determines, through measurement or feedback of the second node (for example, a channel quality information (channel quality information, CQI) feedback of the PHY layer), that quality of the link between the first node and the second node is greater than a preset value, the first node may stop downlink re-routing.

Optionally, after triggering downlink re-routing, the first node starts a timer. When the timer expires, and the first node has not determined that the RLF occurs between the first node and the second node, the first node may stop downlink re-routing.

For example, stopping downlink re-routing may be understood as: The first node stops routing data to the destination node through another path (namely, a backup path, where the backup path may not include the second node) or via another node (where the another node is not the second node), and continues to route the data to the destination node through a source path (namely, an original primary path, where the primary path includes the second node) or via the second node.

S603C is an optional step. For example, the first node may not stop downlink re-routing until the donor node re-configures a new downlink route configuration for the first node.

It should be noted that, in the method 600B, when the first node determines to trigger uplink re-routing, the first node may stop routing the data packet to the donor node through the source path. In the method 600C, when the first node determines to trigger downlink re-routing, the first node may stop routing the data packet to the destination node through the source path. That the first node stops routing the data packet to the destination node through the source path may specifically include at least one of the following: The BAP layer of the first node sends indication information to the RLC layer, where the indication information indicates the RLC layer to perform re-establishment; or the BAP layer of the first node sends indication information to the MAC layer, where the indication information indicates the MAC layer to perform reset (reset).

Certainly, in the method 600B, when the first node determines to trigger uplink re-routing, the first node may alternatively not stop routing the data packet to the destination node through the source path. In the method 600C, when the first node determines to trigger downlink re-routing, the first node may alternatively not stop routing the data packet to the destination node through the source path. For example, the first node supports a DC function, an MC function, or an NSA function. After the first node triggers uplink/downlink re-routing, and before the first node determines that the RLF occurs between the first node and the second node, the first node not only routes data (for example, retransmitted data at the RLC layer or the MAC layer) through the backup path, but also routes data through the source path.

It should be noted that the first information in the method 600B and the second information in the method 600C may be the same as third information. The first threshold and the second threshold may be the same as a third threshold. In this case, the third information may indicate to trigger re-routing when the quantity of transmission/retransmission times of the data packet of the first node reaches/exceeds the third threshold. The configuration of the first timer and the configuration of the second timer may be the same as a configuration of a third timer. In this case, the third information may indicate to trigger re-routing when the third timer expires and the data packet of the first node has not been successfully sent. In other words, the first node may determine, based on the third information, whether to trigger uplink re-routing, or may determine, based on the third information, whether to trigger downlink re-routing. In this way, overheads of air interface signaling can be reduced.

FIG. 6D shows a communication method 600D according to an embodiment of this application.

As shown in FIG. 6D, a first node may be a child node of a second node, the first node is a parent node of a third node, and a destination node may be a donor node. Alternatively, as shown in FIG. 6D, a first node may be a parent node of a second node, the first node is a child node of a third node, and a destination node may be an access node (which may also be referred to as a node accessed by a terminal device) of the terminal device.

At least one relay node may be included between the second node and the destination node, or the second node may be directly connected to the destination node. The communication method 600D includes the following steps.

S601D: The first node sends first indication information to the third node.

The first indication information may indicate a radio link exception. For example, the first indication information may indicate a radio link failure, or the first indication information may indicate that a link recovery attempt is being made.

For example, when determining that radio links between the first node and all second nodes are unavailable (where for example, the RLF occurs on the radio links, congestion occurs on the radio links, the radio links are unavailable due to flow control, or backhaul RLC channels between the first node and all the second nodes are unavailable) (or when the first node determines that radio links between the first node and all child nodes or all parent nodes are unavailable), the first node may send the first indication information to the third node. Specifically, when determining that the radio links between the first node and all the second nodes are unavailable, a DU of the first node may send indication information to an MT of the first node, where the indication information indicates the MT of the first node to send the first indication information to the third node.

For example, when determining that the radio links between the first node and all the second nodes are unavailable, and a radio link recovery attempt is being made (for example, when the second node is located between the first node and a master base station/a master donor node of the first node, or the second node is a master base station/a master donor node of the first node, in process of attempting master cell group (master cell group, MCG) recovery (recovery); for another example, when the second node is located between the first node and a secondary donor node of the first node or the second node is a secondary donor node of the first node, in a process of attempting secondary cell group (secondary cell group, SCG) recovery (recovery)), the first node may send the first indication information to the third node. In this case, the first indication information may indicate that the link recovery attempt is being made. Specifically, when determining that the radio links between the first node and all the second nodes are unavailable, and the radio link recovery attempt is being made, the DU of the first node may send indication information to the MT of the first node, where the indication information indicates the MT of the first node to send the first indication information to the third node.

The first indication information may be carried in a backhaul adaptation protocol (backhaul adaptation protocol, BAP) control protocol data unit (control protocol data unit, control PDU) or a media access control control element (media access control control element, MAC CE) for sending.

S602D: After receiving the first indication information, the third node triggers re-routing.

For example, after receiving the first indication information, the third node re-routes (re-routes) a data packet to be sent to the destination node. Re-routing the data packet to be sent to the destination node means routing data to the destination node through another path. The another path may also be referred to as a backup (backup) path, namely, a path different from an original path on which the third node routes data to the destination node via the first node before the radio links between the first node and all the second nodes are unavailable.

Through the foregoing operations S601D and S602D, the third node can trigger a re-routing function of the data packet after receiving the first indication information, to be specific, re-route the data packet to be sent to the destination node, and route the data packet to the destination node through another available path. This ensures stability, timeliness, and reliability of data transmission.

Optionally, this embodiment of this application may further include the following operation.

S603D: The first node sends second indication information to the third node.

In a possible implementation, the second indication information indicates that the first node is unavailable. For example, the second indication information includes an identifier of the first node, for example, a BAP address (address) of the first node.

In another possible implementation, the second indication information may indicate that channels between the first node and all the second nodes are unavailable. For example, the second indication information includes an identifier of a second backhaul RLC channel, and there is a correspondence between the second backhaul RLC channel and a first backhaul RLC channel. The first backhaul RLC channel includes all backhaul RLC channels between the first node and the second node, and the second backhaul RLC channel includes all backhaul RLC channels between the first node and the third node.

There may be many possibilities for the correspondence between the second backhaul RLC channel and the first backhaul RLC channel. This is not limited in this application. For example, a backhaul RLC channel in the second backhaul RLC channel may correspond to one or more backhaul RLC channels in the first backhaul RLC channel. A backhaul RLC channel in the first backhaul RLC channel may also correspond to one or more backhaul RLC channels in the second backhaul RLC channel. The first node maps data from the first backhaul RLC channel to the second backhaul RLC channel based on the correspondence between the second backhaul RLC channel and the first backhaul RLC channel, or the first node may map data from the second backhaul RLC channel to the first backhaul RLC channel based on the correspondence.

In this application, a correspondence between a radio link and a backhaul RLC channel may be one-to-one, many-to-one, or one-to-many. This is not limited in this application.

Correspondingly, the third node receives the second indication information. In response to the second indication information, the third node may determine to route data (which may be understood as data that originally needs to be routed via the first node) to the destination node through another path. The another path does not include the first node.

The first indication information and the second indication information may be carried in a same message, for example, carried in a same BAP control PDU or MAC CE, and sent to the third node. The first indication information and the second indication information may be same indication information. In other words, the indication information has both a function of the first indication information and a function of the second indication information.

Operation S603D is an optional operation. To be specific, the first node may not send the second indication information to the third node. For example, after receiving the first indication information, the third node determines to route data to the destination node through another path. The another path does not include the first node.

Through the foregoing operation S603D, the third node can obtain more accurate information about the RLF, to implement more efficient and accurate re-routing. For example, the third node may not only route data to the destination node via the first node, but also route other data to another destination node via the first node. Further, there may be a plurality of paths between the first node and the destination node. In these cases, the third node may perform more efficient and accurate re-routing based on the first indication information and the second indication information.

Optionally, this embodiment of this application may further include the following operation.

S604D: The first node sends third indication information to the third node.

The third indication information indicates that radio link recovery succeeds. The first node may send the third indication information to the third node when successfully recovering a link between the first node and the second node, for example, when successfully recovering a link between the first node and a second node, successfully recovering a backhaul RLC channel between the first node and a second node, or accessing a new second node by using an RRC re-establishment procedure.

Correspondingly, the third node receives the third indication information.

In a possible implementation, after receiving the third indication information, the third node disables the re-routing function, to be specific, stops routing data to the destination node through another path (a backup path), and continues to route the data to the destination node through a source path (namely, an original primary path). For example, the third node continues to route the data to the first node, and the first node further routes the data to the destination node.

In another possible implementation, after receiving the third indication information, the third node does not disable the re-routing function, but continues to route data to the destination node through another path (a backup path) until the donor node configures a new routing configuration.

Through the foregoing operation S604D, the third node can stop re-routing (or disable the re-routing function) in time, to reduce processing complexity of an upstream node or a downstream node of the third node.

It should be noted that, when the first node is a child node of the third node and is a parent node of the second node, the first indication information may only indicate the radio link failure. When the first node is a parent node of the third node and is a child node of the second node, the first indication information may indicate the radio link failure, or the first indication information may indicate that the link recovery attempt is being made.

In this embodiment of this application, the first node, the second node, or the third node may be an IAB node, the donor node may be an IAB donor, and the access node of the terminal device may be an access IAB node.

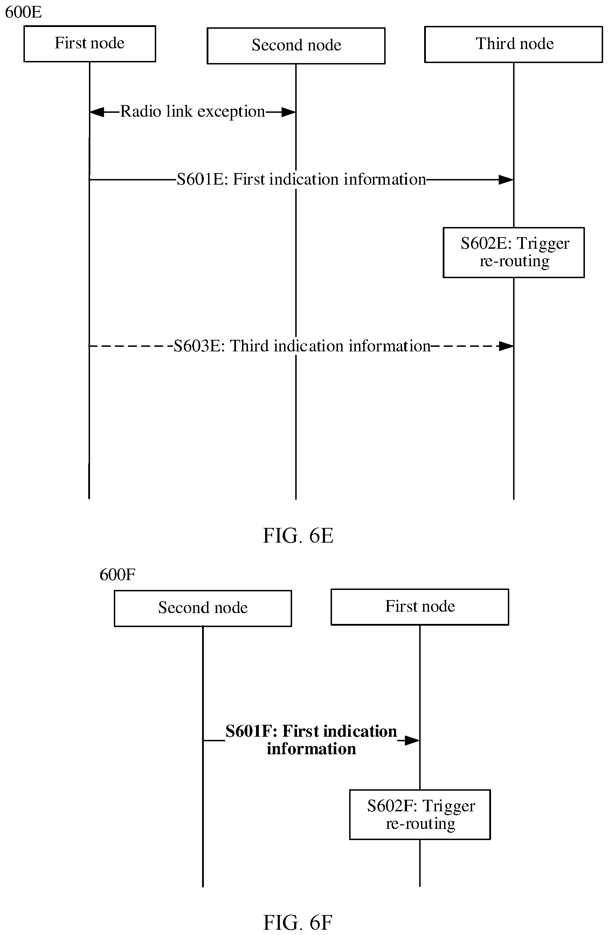

FIG. 6E shows a communication method 600E according to an embodiment of this application.

As shown in FIG. 6E, a first node may be a child node of a second node, the first node is a parent node of a third node, and a destination node may be a donor node. Alternatively, as shown in FIG. 6E, a first node may be a parent node of a second node, the first node is a child node of a third node, and a destination node may be an access node (which may also be referred to as a node accessed by a terminal device) of the terminal device. In FIG. 6E, the second node may be located between the first node and a master base station/a master donor node of the first node, or between the first node and a secondary donor node of the first node; the second node is a master base station/a master donor node of the first node; or the second node is a secondary donor node of the first node. The master base station/the master donor node or the secondary donor node may be understood with reference to the embodiment corresponding to FIG. 5.

At least one relay node may be included between the second node and the destination node, or the second node may be directly connected to the destination node. The communication method 600E includes the following steps.

S601E: The first node sends first indication information to the third node.

The first indication information may indicate a radio link exception, for example, may indicate a radio link failure, indicate that a backhaul RLC channel is unavailable (where for example, the RLF occurs on the backhaul RLC channel, congestion occurs on the backhaul RLC channel, or the backhaul RLC channel is unavailable due to flow control), an attempt is being made to recover the backhaul RLC channel, a path identified by a first routing ID is unavailable, or a path recovery attempt is being made.

For example, the first node may send the first indication information to the third node when determining that a first backhaul RLC channel between the first node and the second node is unavailable (for example, the RLF occurs on the first backhaul RLC channel, congestion occurs on the first backhaul RLC channel, or the first backhaul RLC channel is unavailable due to flow control). Specifically, when determining that the first backhaul RLC channel is unavailable, a DU of the first node may send indication information to an MT of the first node, where the indication information indicates the MT of the first node to send the first indication information to the third node.

For example, when determining that the first backhaul RLC channel between the first node and the second node is unavailable, and the attempt is being made to recover the backhaul RLC channel (for example, when the second node is located between the first node and the master base station/the master donor node of the first node, or the second node is the master base station/the master donor node of the first node, in process of attempting master cell group (master cell group, MCG) recovery (recovery); for another example, when the second node is located between the first node and the secondary donor node of the first node, or the second node is the secondary donor node of the first node, in a process of attempting secondary cell group (secondary cell group, SCG) recovery (recovery)), the first node may send the first indication information to the third node. Specifically, when determining that the first backhaul RLC channel is unavailable, and the attempt is being made to recover the backhaul RLC channel, the DU of the first node may send indication information to the MT of the first node, where the indication information indicates the MT of the first node to send the first indication information to the third node.

Optionally, the first indication information may include an identifier of a second backhaul RLC channel. The second backhaul RLC channel is a backhaul RLC channel between the first node and the third node. There is a correspondence between the second backhaul RLC channel and the unavailable first backhaul RLC channel. The first backhaul RLC channel is an unavailable backhaul RLC channel between the first node and the second node. There may be many possibilities for the correspondence between the second backhaul RLC channel and the unavailable first backhaul RLC channel. This is not limited in this application. For example, the second backhaul RLC channel may correspond to one or more unavailable first backhaul RLC channels, and the unavailable first backhaul RLC channel may also correspond to one or more second backhaul RLC channels. The first node maps data from the first backhaul RLC channel to the second backhaul RLC channel based on the correspondence between the second backhaul RLC channel and the first backhaul RLC channel, or the first node may map data from the second backhaul RLC channel to the first backhaul RLC channel based on the correspondence.

For example, the first node may send the first indication information to the third node when determining that the path identified by the first routing ID between the first node and the second node is unavailable. Specifically, when determining that the path identified by the first routing ID is unavailable, the DU of the first node may send indication information to the MT of the first node, where the indication information indicates the MT of the first node to send the first indication information to the third node.

For example, when determining that the path identified by the first routing ID between the first node and the second node is unavailable, and the path recovery attempt is being made (for example, when the second node is located between the first node and the master base station/the master donor node of the first node, or the second node is the master base station/the master donor node of the first node, in process of attempting master cell group (master cell group, MCG) recovery (recovery); for another example, when the second node is located between the first node and the secondary donor node of the first node, or the second node is the secondary donor node of the first node, in a process of attempting secondary cell group (secondary cell group, SCG) recovery (recovery)), the first node may send the first indication information to the third node. Specifically, when determining that the path identified by the first routing ID is unavailable, and the path recovery attempt is being made, the DU of the first node may send indication information to the MT of the first node, where the indication information indicates the MT of the first node to send the first indication information to the third node.

Optionally, the first indication information may include the first routing ID.

The first indication information may be carried in a BAP control PDU or a MAC CE for sending.

S602E: After receiving the first indication information, the third node triggers re-routing.

For example, after receiving the first indication information, the third node re-routes (re-routes) a data packet to be sent to the destination node. Re-routing the data packet to be sent to the destination node means routing data to the destination node through another path. The another path may also be referred to as a backup (backup) path, namely, a path different from an original path on which the third node routes data to the destination node via the first node before the first backhaul RLC channel is unavailable or the path identified by the first routing ID is unavailable.

For example, if the first node sends the first indication information to the third node when the first backhaul RLC channel between the first node and the second node is unavailable, or when the first backhaul RLC channel between the first node and the second node is unavailable, and the attempt is being made to recover the backhaul RLC channel, through the foregoing operations S601E and S602E, the third node can trigger a re-routing function of the data packet after receiving the first indication information, to be specific, re-route the data packet to be sent to the destination node, and route the data packet to the destination node through another available path.

For example, if the first node sends the first indication information to the third node when the path identified by the first routing ID between the first node and the second node is unavailable, or when the path identified by the first routing ID is unavailable, and the path recovery attempt is being made, through the foregoing operations S601E and S602E, the third node can trigger a re-routing function of the data packet after receiving the first indication information, to be specific, re-route the data packet to be sent to the destination node, and route the data packet to the destination node through another available path.

For example, when the second indication information includes the identifier of the second backhaul RLC channel, the third node may determine, based on the second indication information, to route, to the destination node through another path, data that originally needs to be mapped to the second backhaul RLC channel (where in other words, before the first backhaul RLC channel becomes unavailable, the third node maps the data to the second backhaul RLC channel for transmission). The another path does not include the first node or does not pass through the second backhaul RLC channel.

For example, when the second indication information includes the first routing ID, the third node may determine, based on the second indication information, to route data to the destination node through another path (where for example, a routing ID carried in the data is equal to the first routing ID included in the second indication information). A routing ID of the another path is not equal to the first routing ID included in the second indication information.

Through the foregoing operations S601E and S602E, the third node can obtain more accurate information about the link exception, to implement more efficient and accurate re-routing.

Optionally, this embodiment of this application may further include the following operation.

S603E: The first node sends third indication information to the third node.

The third indication information indicates that recovery of the backhaul RLC channel or path succeeds. The first node may send the third indication information to the third node when the first backhaul RLC channel or the path identified by the first routing ID between the first node and the second node is successfully recovered.

Correspondingly, the third node receives the third indication information.

In a possible implementation, after receiving the third indication information, the third node disables the re-routing function, to be specific, stops routing data to the destination node through another path (a backup path), and continues to route the data to the destination node through the second backhaul RLC channel or the path identified by the first routing ID. For example, the third node continues to route the data to the first node, and the first node further routes the data to the destination node.

In another possible implementation, after receiving the third indication information, the third node does not disable the re-routing function, but continues to route, to the destination node through another path (a backup path), data that originally needs to be mapped to the second backhaul RLC channel or data that carries a routing ID equal to the first routing ID, until an IAB donor configures a new routing configuration.

Through the foregoing operation S603E, the third node can stop re-routing (or disable the re-routing function) in time, to reduce processing complexity of an upstream node or a downstream node of the third node.

In this embodiment of this application, the first node, the second node, or the third node may be an IAB node, the donor node may be an IAB donor, and the access node of the terminal device may be an access IAB node.

FIG. 6F shows a communication method 600F according to an embodiment of this application.

As shown in FIG. 6F, a first node may be a child node of a second node; a first node may be a parent node of a second node; or a first node may be a donor node of a second node. The first node may be located between the second node and a master base station/a master donor node of the second node, or between the second node and a secondary donor node of the second node; the first node is a master base station/a master donor node of the second node; or the first node is a secondary donor node of the second node. The master base station/the master donor node or the secondary donor node may be understood with reference to the embodiment corresponding to FIG. 5.

S601F: The second node sends first indication information to the first node.

The first indication information may indicate a radio link exception. For example, the first indication information may indicate a radio link failure, or the first indication information may indicate that a link recovery attempt is being made or a BAP PDU cannot be routed.

When determining that a first BAP PDU cannot be routed (for example, the first BAP PDU is congested in the first node, or the first BAP PDU has not been sent in the first node within preset duration), the second node sends the first indication information to the first node. Specifically, when determining that the first BAP PDU cannot be routed, a DU of the second node may send indication information to an MT of the second node, where the indication information indicates the MT of the second node to send the first indication information to the first node.

Optionally, the first indication information may include a routing identity (routing ID) or a BAP address corresponding to the first BAP PDU. The routing identity (routing ID) or the BAP address corresponding to the first BAP PDU may be a routing ID or a BAP address carried in a BAP header of the first BAP PDU.

S602F: The first node triggers re-routing in response to the first indication information.

For example, after receiving the first indication information, the first node re-routes (re-routes) a data packet to be sent to a destination node. Re-routing the data packet to be sent to the destination node means routing data to the destination node through another path. The another path may also be referred to as a backup (backup) path, namely, a path different from an original path on which the first node routes data to the destination node via the second node before the first indication information is received.

For example, when the first indication information includes the BAP address (address), the first node may determine, based on the first indication information, to route the first BAP PDU to the destination node through another path. The BAP header of the first BAP PDU carries the routing ID or the BAP address. The another path does not include the second node.

For example, when the second indication information includes the routing identity, the first node may determine, based on the first indication information, to route the first BAP PDU to the destination node through another path. The BAP header of the first BAP PDU carries the routing ID or the BAP address. A routing ID of the another path is not equal to the routing ID included in the first indication information. Alternatively, the another path does not include the second node.

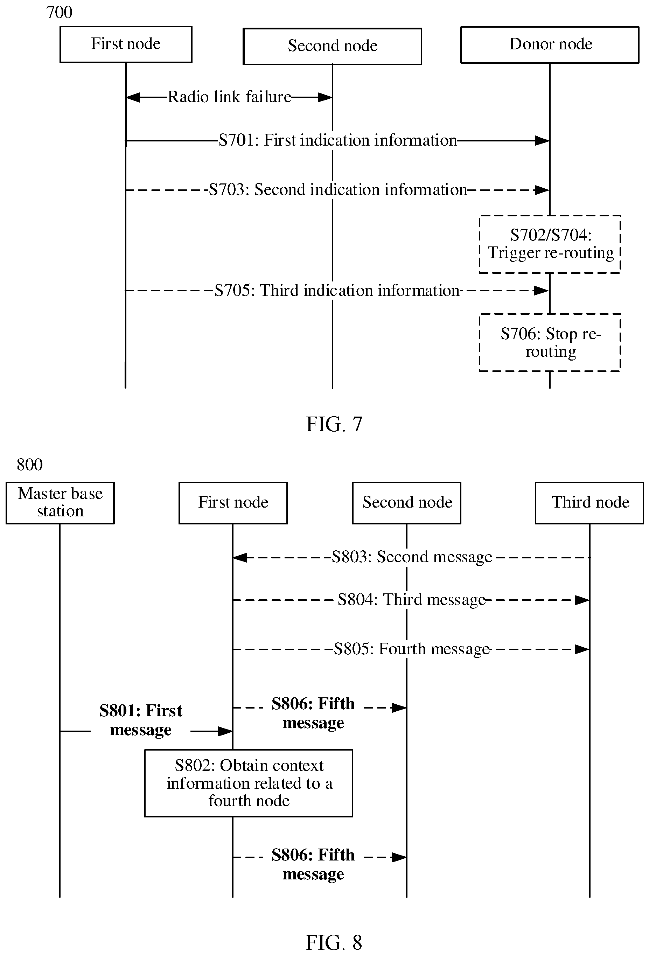

FIG. 7 shows a communication method 700 according to an embodiment of this application. As shown in FIG. 7, a first node is a parent node of a second node, a donor node is a donor node connected to the first node, and a destination node may be an access node of a terminal device. The communication method 700 includes the following steps.

S701: The first node sends first indication information to the donor node.

The first indication information may indicate a radio link failure.

For example, the first node may send the first indication information to the donor node when determining that the RLF occurs on a radio link between the first node and the second node. In this case, the first indication information may indicate the radio link failure.

For example, the first node may send the first indication information to the donor node when determining that the RLF occurs on a radio link between the first node and the second node, and there is no other available path between the first node and the destination node. In this case, the first indication information may indicate the radio link failure.

In an implementation, the first indication information may be carried in an F1AP message, for example, a user equipment context release request (UE Context Release Request) message. Specifically, a cause (cause) field in the UE context release request message may be set to a radio link failure indication (RLF indication).

In another implementation, the first indication information may alternatively be carried in a BAP control PDU, and sent to the donor node in a hop-by-hop manner.

S702: The donor node receives the first indication information.

For example, after receiving the first indication information, the donor node re-routes a data packet to be sent to the destination node. Re-routing the data packet to be sent to the destination node means routing data to the destination node through another path. The another path may also be referred to as a backup path.

For example, if the first node sends the first indication information to the donor node when the RLF occurs on the radio link between the first node and the second node, through the foregoing operations S701 and S702, the donor node can trigger a re-routing function of the data packet after receiving the first indication information, to be specific, re-route the data packet to be sent to the destination node, and route the data packet to the destination node through another available path.

For example, if the first node sends the first indication information to the donor node when the RLF occurs on the radio link between the first node and the second node, and there is no other available path between the first node and the destination node, through the foregoing operations S701 and S702, the donor node can trigger a re-routing operation of the data packet after receiving the first indication information, and a re-routing function of the first node can be fully utilized, to improve data relay stability and reduce overheads of air interface signaling. For example, there are a plurality of paths between the first node and the destination node. When the RLF occurs on one of the paths, the first node may perform re-routing, and route data to the destination node through another path. In this case, the first indication information may not need to be sent to the donor node. Otherwise, unnecessary re-routing may be performed by the donor node, causing a waste of resources, and also causing transmission of a large amount of first indication information over an air interface.

Optionally, this embodiment of this application may further include the following operation.

S703: The first node sends second indication information to the donor node.

The second indication information indicates that a path that passes through the first node to the destination node is unavailable.

For example, the second indication information includes a BAP address (address) of the destination node. Specifically, the BAP address of the destination node may be a BAP address of an access IAB node. In this case, that the second indication information indicates that a path that passes through the first node to the destination node is unavailable may mean that all paths that pass through the first node to the destination node are unavailable.

For example, the second indication information includes a path identity (Path ID) corresponding to the path that passes through the first node to the destination node, or a path identity corresponding to a path from the first node to the destination node. In this case, that the second indication information indicates that a path that passes through the first node to the destination node is unavailable may mean that a path whose corresponding path ID is equal to the path ID included in the second indication information is unavailable in all paths that pass through the first node to the destination node.

For example, the second indication information includes a routing ID corresponding to the path that passes through the first node to the destination node, or a routing identity corresponding to a path from the first node to the destination node. The routing identity includes the BAP address of the destination node and the path ID. Further, if there are a plurality of paths between the first node and the destination node, when the RLF occurs on one or more of the paths, the second indication information may include one or more routing IDs. In this case, that the second indication information indicates that a path that passes through the first node to the destination node is unavailable may mean that a path whose corresponding routing ID is equal to the routing ID included in the second indication information is unavailable in all paths that pass through the first node to the destination node. Alternatively, in this case, that the second indication information indicates that a path that passes through the first node to the destination node is unavailable may mean that all paths that pass through the first node to the destination node are unavailable.

For example, the second indication information includes an identifier of the second node. The identifier of the second node may be a BAP address of the second node. The identifier of the second node may alternatively be an identifier of the second node on an F1 interface between the second node and the donor node, for example, an F1 interface application protocol identity (F1 application protocol identity, F1AP ID). In this case, that the second indication information indicates that a path that passes through the first node to the destination node is unavailable may mean that a path that includes the direct radio link between the first node and the second node is unavailable in all paths that pass through the first node to the destination node. Alternatively, in this case, that the second indication information indicates that a path that passes through the first node to the destination node is unavailable may mean that all paths that pass through the first node to the destination node are unavailable.

S704: The donor node receives the second indication information.

For example, when the second indication information includes the BAP address of the destination node, the donor node may determine, based on the second indication information, to route data to the destination node through another path. The another path does not include the first node.

For example, when the second indication information includes the routing ID corresponding to the path that passes through the first node to the destination node (or the routing identity corresponding to the path from the first node to the destination node), the donor node may determine, based on the second indication information, to route data to the destination node through another path. A routing ID of the another path is not equal to the routing ID included in the second indication information.

The donor node may determine, based on the second indication information, to re-route only the data packet to be sent to the destination node. In other words, the donor node may determine not to re-route a data packet to be sent to another destination node, and the data packet may still be routed via the first node.

For example, when the second indication information includes the path identity corresponding to the path that passes through the first node to the destination node (or the path identity corresponding to the path from the first node to the destination node), the donor node may determine, based on the second indication information, to route data to the destination node through another path. A path identity of the another path is not equal to the path ID included in the second indication information.

For example, when the second indication information includes the identifier of the second node, the donor node may determine, based on the second indication information, to route data to the destination node through another path. A routing ID of the another path is not equal to a routing ID corresponding to a path that passes through the first node to the destination node and that includes the direct radio link between the first node and the second node. Alternatively, the another path does not include the first node.

The first indication information and the second indication information may be carried in a same message and sent to the donor node, for example, carried in the same F1AP message, for example, the UE context release request message, or is carried in the same BAP control PDU and sent to the donor node in a hop-by-hop manner.

Operations S703 and S704 are optional operations. To be specific, the first node may not send the second indication information to the donor node. For example, after receiving the first indication information, the donor node determines to route data to the destination node through another path. The another path does not include the first node.

Through the foregoing operations S701 to S704, the donor node can obtain more accurate information about the RLF, to implement more efficient and accurate re-routing. For example, the donor node may not only route data to the destination node via the first node, but also route other data to another destination node via the first node. Further, there may be a plurality of paths between the first node and the destination node. In these cases, the donor node may perform more efficient and accurate re-routing based on the first indication information and the second indication information.

In this embodiment of this application, the first node, the second node, or the third node may be an IAB node, the donor node may be an IAB donor, and the access node of the terminal device may be an access IAB node.

FIG. 8 shows a communication method 800 according to an embodiment of this application. As shown in FIG. 8, a first node is a parent node of a second node, a donor node is a donor node connected to the first node, and a destination node may be an access node of a terminal device. The communication method 800 includes the following steps.

S801: A master base station sends a first message to the first node.

When the master base station is a master base station of the second node, the first message requests to add the first node as a secondary base station of the second node.

When the master base station is a master base station of a fourth node, the first message requests to add the first node as a secondary base station of the fourth node.

The master base station may send the first message to the first node after receiving a sixth message from a third node. The third node is a source secondary base station of the second node or the fourth node. The sixth message requests to use the first node as a target secondary base station of the second node or the fourth node. The sixth message may include an identifier of the first node. The identifier of the first node may be a base station identifier (gNB ID) of the first node.

The master base station may be an LTE master base station (master eNodeB, MeNB). The secondary base station may be an NR secondary base station (secondary gNodeB, SgNB). Optionally, the master base station may alternatively be an NR master base station, and the secondary base station may be an NR secondary base station.

For example, when the first message requests to add the first node as a secondary base station of the second node, the first message includes a physical cell identifier (physical cell identifier, PCI) of a cell that is of the third node and that is accessed by the second node and a cell radio network temporary identifier (cell radio network temporary identifier, C-RNTI) of the second node in a cell of the third node. The second node is a downstream node of the third node. For example, the second node may be a child node of the third node, or may be a child node of the child node of the third node. The second node may be a wireless backhaul device or a terminal. The cell that is of the third node and that is accessed by the second node may be a cell that is provided by the third node and that is used to serve the fourth node.

For example, when the first message requests to add the first node as a secondary base station of the second node, the first message includes an identifier of the third node and an identifier of the second node on an interface between the third node and the first node. The identifier of the third node may be a base station identifier (for example, a gNB ID) of the third node. The interface between the third node and the first node may be an X2 interface, and the identifier of the second node on the interface between the third node and the first node may be a user application protocol identity (UE X2 Application Protocol identity, UE X2AP ID) allocated by the third node to the second node on the X2 interface, a UE X2AP ID allocated by the first node to the second node on the X2 interface, or the UE X2AP ID allocated by the third node to the second node on the X2 interface and the UE X2AP ID allocated by the first node to the second node on the X2 interface. Alternatively, the interface between the third node and the first node may be an Xn interface, and the identifier of the second node on the interface between the third node and the first node may be a user application protocol identity (UE Xn Application Protocol identity, UE XnAP ID) allocated by the third node to the second node on the Xn interface, a UE XnAP ID allocated by the first node to the second node on the Xn interface, or the UE XnAP ID allocated by the third node to the second node on the Xn interface and the UE XnAP ID allocated by the first node to the second node on the Xn interface.

For example, when the first message requests to add the first node as a secondary base station of the fourth node, the first message includes a physical cell identifier (physical cell identifier, PCI) of a cell that is of the second node and that is accessed by the fourth node and a cell radio network temporary identifier (cell radio network temporary identifier, C-RNTI) of the fourth node in the cell of the second node. The fourth node is a downstream node of the second node. For example, the fourth node may be a child node of the second node, or may be a child node of the child node of the second node. The fourth node may be a wireless backhaul device or a terminal. The cell that is of the second node and that is accessed by the fourth node may be a cell that is provided by the second node and that is used to serve the fourth node. For example, when the first message requests to add the first node as a secondary base station of the fourth node, the first message includes an identifier of the third node and an identifier of the fourth node on an interface between the third node and the first node. The identifier of the third node may be a base station identifier (for example, a gNB ID) of the third node. The interface between the third node and the first node may be an X2 interface, and the identifier of the fourth node on the interface between the third node and the first node may be a user application protocol identity (UE X2 Application Protocol identity, UE X2AP ID) allocated by the third node to the fourth node on the X2 interface, a UE X2AP ID allocated by the first node to the fourth node on the X2 interface, or the UE X2AP ID allocated by the third node to the fourth node on the X2 interface and the UE X2AP ID allocated by the first node to the fourth node on the X2 interface. Alternatively, the interface between the third node and the first node may be an Xn interface, and the identifier of the fourth node on the interface between the third node and the first node may be a user application protocol identity (UE Xn Application Protocol identity, UE XnAP ID) allocated by the third node to the fourth node on the Xn interface, a UE XnAP ID allocated by the first node to the fourth node on the Xn interface, or the UE XnAP ID allocated by the third node to the fourth node on the Xn interface and the UE XnAP ID allocated by the first node to the fourth node on the Xn interface.

The first message may be a secondary base station addition request (for example, an SgNB addition request) message, or a secondary base station modification request (for example, an SgNB modification request) message. The second message may be a secondary base station change request (for example, SgNB change required).

S802: The first node receives the first message.

For example, after receiving the first message, the first node obtains context information of the second node. For example, the first node may extract the context information of the second node from an internal cache based on an identifier of the second node in the first message.

For example, after receiving the first message, the first node obtains context information of the fourth node. For example, the first node may extract the context information of the fourth node from an internal cache based on an identifier of the fourth node in the first message.

Optionally, the context information that is of the second node or the fourth node and that is cached on the first node may be obtained from the third node in advance by using the following operation and cached on the first node:

S803: The first node receives a second message from the second node.

The second message requests to establish or re-establish a radio resource control (radio resource control, RRC) connection to the second node. The second message may be an RRC re-establishment request message (for example, an RRC re-establishment request).

The second node may send the second message to the first node when an RLF occurs on a radio link between the second node and the third node.

It is noted that in this embodiment, a scenario in which the second node is directly connected to the first node is used as an example for description. This embodiment is also applicable to a scenario in which the second node is connected to the first node by using at least one other wireless backhaul device, in other words, the second node sends the second message to the first node by using at least one other wireless backhaul device.

S804: The first node sends a third message to the third node.

The third message requests to obtain context information related to the second node. The third message may be a user equipment context obtaining request message (for example, a retrieve UE context request).

S805: The first node receives a fourth message from the third node.

The fourth message includes the context information related to the second node. The fourth message may be a user equipment context obtaining response message (retrieve UE context response).

The context information related to the second node includes at least one of the following: the context information of the second node, topology information between the second node and a downstream node of the second node, context information of the downstream node of the second node, indication information indicating whether the second node is a wireless backhaul device, or indication information indicating whether the downstream node of the second node is a wireless backhaul device. The downstream node of the second node includes a child node of the second node, a child node of the child node, and the like, may be a wireless backhaul device, or may be a terminal. In this embodiment, the downstream node of the second node may refer to the fourth node.

The context information of the downstream node of the second node includes the PCI and the C-RNTI, or the context information of the downstream node of the second node includes the identifier of the third node and an identifier of the downstream node on the interface between the third node and the first node.

When the second node is an IAB node, the context information of the second node may include a context of an MT of the IAB node and/or a context of a DU of the IAB node. The context of the MT of the IAB node includes configuration information of a backhaul radio link control channel (backhaul RLC channel, BH RLC CH). The context of the DU of the IAB node includes an identifier of the IAB-DU, a configuration of a cell of the IAB-DU, and the like.

Optionally, the topology information between the second node and the downstream node of the second node may include indication information indicating that the downstream node of the second node is a terminal device, and/or indication information indicating that the downstream node of the second node is a wireless backhaul device.

Through the foregoing operations S803 to S805, the first node may obtain the context information of the fourth node, and the first node may locally cache the context information of the fourth node, so that after receiving the first message sent by the master base station of the fourth node, the first node can extract the context information of the fourth node from the cache based on the identifier of the fourth node carried in the first message.

Optionally, this embodiment of this application may further include the following operation.

S806: The first node sends a fifth message to the second node.

For example, the fifth message is used to establish or re-establish the RRC connection to the second node. The fifth message may be an RRC re-establishment message (for example, RRC re-establishment).

For example, the fifth message may include information used to update a cell served by the second node. The information used to update the cell served by the second node may include a cell global identifier (cell global identifier, CGI) and/or a cell identifier (cell identity) of the cell when the second node is connected to the first node. The cell identity may include a base station identifier (for example, a gNB Id) and a cell local identifier (cell local identifier, cellLocalId). The cell global identifier CGI includes a public land mobile network identifier (public land mobile network identifier, PLMNId), a base station identifier (for example, a gNB Id), and cellLocalId. Specifically, the first node allocates a new CGI and/or cell identity to the cell served by the second node, and sends the new CGI and/or cell identity to the second node by using the fifth message. A base station identifier (for example, a gNB ID) included in the new CGI and/or cell identity of the cell served by the second node is the same as an identifier of a base station to which the first node belongs.

For example, the fifth message may not only be used to establish or re-establish the RRC connection to the second node, but also include the information used to update the cell served by the second node.

A sequence between S806 and S801 or S802 is not limited. To be specific, S806 may be performed before S801 and S802, or may be performed before S801 and after S802, or may be performed after S801 and S802.

It is noted that in this embodiment, a scenario in which the second node is directly connected to the first node is used as an example for description. This embodiment is also applicable to a scenario in which the second node is connected to the first node by using at least one other wireless backhaul device, in other words, the second node sends the second message to the first node by using at least one other wireless backhaul device.

According to this embodiment of this application, in a scenario in which the RLF occurs on the second node, the second node may be re-established from the source secondary base station to a new secondary base station, to reduce impact on the downstream node of the second node, and ensure normal working of the downstream node of the second node.

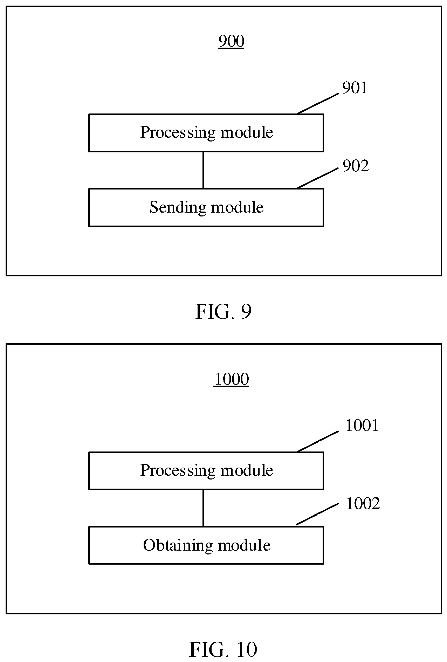

FIG. 9 is a schematic block diagram of a communication apparatus 900 according to an embodiment of this application. The following specifically describes a structure and a function of the communication apparatus 900 with reference to FIG. 9. The communication apparatus 900 may include a processing module 901 and a sending module 902.

The processing module 901 is configured to determine that a radio link failure RLF occurs on a radio link between the apparatus and a second node, and there is no other available path between the apparatus and a destination node.

The sending module 902 is configured to send first indication information to a third node, where the first indication information indicates the RLF or indicates that a link recovery attempt is being made.

The second node is a parent node of a first node, and the third node is a child node of the first node; or
the second node is a child node of a first node, and the third node is a parent node of the first node or a donor node connected to the first node.

Optionally, when the second node is a parent node of the first node, and the third node is a child node of the first node, the sending module 902 is specifically configured to: when attempting to recover the radio link, send the first indication information to the third node, where the first indication information indicates that the link recovery attempt is being made.

Optionally, the sending module 902 is further configured to send second indication information to the third node, where the second indication information indicates that a path that passes through the first node to the destination node is unavailable.

Optionally, the second indication information includes a backhaul adaptation layer BAP address of the destination node, a routing identity routing ID corresponding to the path that passes through the first node to the destination node, or a path identity path ID corresponding to the path that passes through the first node to the destination node.

Optionally, that the second indication information indicates that a path that passes through the first node to the destination node is unavailable includes: The second indication information indicates that all paths that pass through the first node to the destination node are unavailable;
the second indication information indicates that a path whose corresponding path ID is equal to the path ID included in the second indication information is unavailable in all paths that pass through the first node to the destination node; or the second indication information indicates that a path whose corresponding routing ID is equal to the routing ID included in the second indication information is unavailable in all paths that pass through the first node to the destination node.

Optionally, when the second node is a child node of the first node, and the third node is a donor node connected to the first node, the second indication information includes an identifier of the second node.

Optionally, that the second indication information indicates that a path that passes through the first node to the destination node is unavailable includes: The second indication information indicates that a path that includes the direct radio link between the first node and the second node is unavailable in all paths that pass through the first node to the destination node.

FIG. 10 is a schematic block diagram of a communication apparatus 1000 according to an embodiment of this application. The following specifically describes a structure and a function of the communication apparatus 1000 with reference to FIG. 10. The communication apparatus 1000 may include a processing module 1001 and an obtaining module 1002.

The obtaining module 1002 is configured to receive second indication information from a first node, where the second indication information indicates that a path that passes through the first node to a destination node is unavailable.

The processing module 1001 is configured to determine to route data to the destination node through another path.

Optionally, the obtaining module 1002 is further configured to receive first indication information from the first node, where the first indication information indicates an RLF or indicates that a link recovery attempt is being made.

Optionally, the second indication information includes a backhaul adaptation layer BAP address of the destination node, a routing identity routing ID corresponding to the path that passes through the first node to the destination node, or a path identity path ID corresponding to the path that passes through the first node to the destination node.

Optionally, the another path does not include the first node, a routing ID of the another path is not equal to the routing ID included in the second indication information, or a path ID of the another path is not equal to the path ID included in the second indication information.

Optionally, the second indication information includes an identifier of a second node, the second node is a child node of the first node, and the RLF occurs on a radio link between the first node and the second node.

Optionally, a routing ID of the another path is not equal to a routing ID corresponding to a path that passes through the first node to the destination node and that includes the direct radio link between the first node and the second node.

Optionally, the obtaining module 1002 is further configured to receive third indication information from the first node, where the third indication information indicates that radio link recovery succeeds.

The processing module 1001 is further configured to stop routing the data to the destination node through the another path.

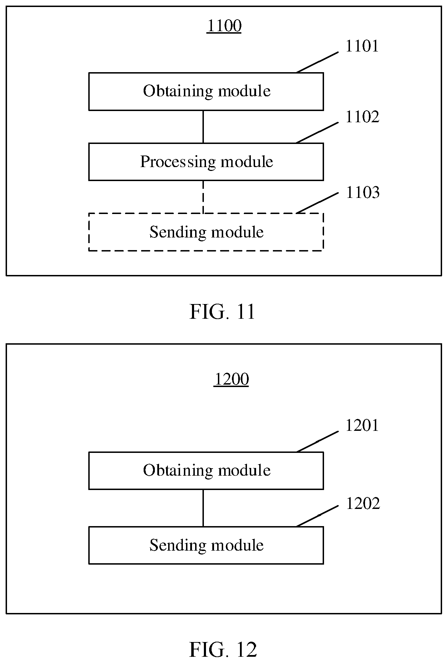

FIG. 11 is a schematic block diagram of a communication apparatus 1100 according to an embodiment of this application. The following specifically describes a structure and a function of the communication apparatus 1100 with reference to FIG. 11. The communication apparatus 1100 may include an obtaining module 1101 and a processing module 1102, and optionally, may further include a sending module 1103.

The obtaining module 1101 is configured to receive a first message from a master base station of a fourth node, where the first message requests to add a first node as a secondary base station of the fourth node.

The first message includes: a physical cell identifier PCI of a cell that is of a second node and that is accessed by the fourth node and a cell radio network temporary identifier C-RNTI of the fourth node in the cell of the second node; or an identifier of a third node and an identifier of the fourth node on an interface between the third node and the first node, where the third node is a source secondary base station of the fourth node, and the fourth node is a downstream node of the second node.

The processing module 1102 is configured to obtain context information of the fourth node.

Optionally, before receiving the first message, the obtaining module 1101 is further configured to receive a second message from the second node, where the second message requests to establish or re-establish a radio resource control RRC connection to the second node; the sending module 1103 is configured to send a third message to the third node, where the third message requests to obtain context information related to the second node; the obtaining module 1101 is further configured to receive a fourth message from the third node, where the fourth message includes the context information related to the second node; and the sending module 1103 is further configured to send a fifth message to the second node, where the fifth message is used to establish or re-establish the RRC connection to the second node.

Optionally, the fifth message includes information used to update a cell served by the second node.

Optionally, the information used to update the cell served by the second node includes a global cell identifier CGI and/or a cell identity of the cell of the second node when the second node is connected to the first node.

Optionally, the context information related to the second node includes at least one of the following: context information of the second node, topology information between the second node and the fourth node, the context information of the fourth node, indication information indicating whether the second node is a wireless backhaul device, or indication information indicating whether the fourth node is a wireless backhaul device.

Optionally, the context information of the fourth node includes: the PCI and the C-RNTI; or the identifier of the third node and the identifier of the fourth node on the interface between the third node and the first node.

FIG. 12 is a schematic block diagram of a communication apparatus 1200 according to an embodiment of this application. The following specifically describes a structure and a function of the communication apparatus 1200 with reference to FIG. 12. The communication apparatus 1200 may include an obtaining module 1201 and a sending module 1202.

The obtaining module 1201 is configured to receive a sixth message from a third node, where the sixth message requests to use a first node as a target secondary base station of a fourth node, and the third node is a source secondary base station of the fourth node.

The sending module 1202 is configured to send a first message to the first node, where the first message requests to add the first node as a secondary base station of the fourth node, and the first message includes: a physical cell identifier PCI of a cell that is of a second node and that is accessed by the fourth node and a cell radio network temporary identifier C-RNTI of the fourth node in the cell of the second node; or an identifier of the third node and an identifier of the fourth node on an interface between the third node and the first node.

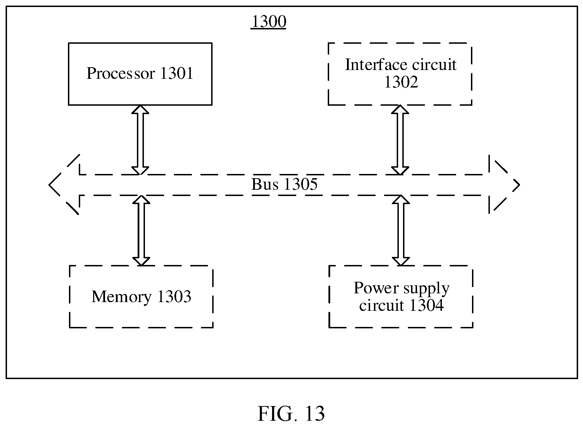

Based on a same technical concept, an embodiment of this application further provides an apparatus 1300. The following specifically describes a structure and a function of the apparatus 1300 with reference to a schematic block diagram of the apparatus 1300 in FIG. 13. The apparatus may include at least one processor 1301, and optionally, further includes an interface circuit 1302. When related program instructions are executed in the at least one processor 1301, the apparatus 1300 may be enabled to implement the communication method provided in any one of the foregoing embodiments and the possible designs thereof. Alternatively, the processor 1301 is configured to implement, by using a logic circuit or executing code instructions, the communication method provided in any one of the foregoing embodiments and the possible designs thereof. The interface circuit 1302 may be configured to: receive the program instructions and transmit the program instructions to the processor. Alternatively, the interface circuit 1302 may be used by the apparatus 1300 to communicate and interact with another communication device, for example, exchange control signaling and/or service data with another communication device. For example, the interface circuit 1302 may be configured to: receive a signal from an apparatus other than the apparatus 1300, and transmit the signal to the processor 1301; or send a signal from the processor 1301 to a communication apparatus other than the apparatus 1300. The interface circuit 1302 may be a code and/or data read and write interface circuit, or the interface circuit 1302 may be a signal transmission interface circuit between a communication processor and a transceiver. Optionally, the communication apparatus 1300 may further include at least one memory 1303, and the memory 1303 may be configured to store the related program instructions and/or data that are/is required. Optionally, the apparatus 1300 may further include a power supply circuit 1304. The power supply circuit 1304 may be configured to supply power to the processor 1301. The power supply circuit 1304 and the processor 1301 may be located in a same chip, or may be located in a chip other than a chip in which the processor 1301 is located. Optionally, the apparatus 1300 may further include a bus 1305, and parts in the apparatus 1300 may be interconnected through the bus 1305.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or the processor may be any conventional processor or the like.

It should be further understood that the memory in embodiments of this application may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of random access memories (random access memories, RAMs) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The power supply circuit in embodiments of this application includes but is not limited to at least one of the following: a power supply line, a power supply subsystem, a power management chip, a power consumption management processor, or a power consumption management control circuit.

A transceiver apparatus, an interface circuit, or the transceiver in embodiments of this application may include a separate transmitter and/or a separate receiver, or the transmitter and the receiver may be integrated. The transceiver apparatus, the interface circuit, or the transceiver may work under an indication of a corresponding processor. Optionally, the transmitter may correspond to a transmitter machine in a physical device, and the receiver may correspond to a receiver machine in the physical device.

It may be clearly understood by a person skilled in the art that, for the purpose of convenient and brief description, division of the foregoing functional modules is used as an example for illustration. During actual application, the foregoing functions can be allocated to different functional modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In embodiments of this application, it should be understood that the disclosed systems, apparatuses, and methods may be implemented in other manners. For example, the described apparatus embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

A person of ordinary skill in the art may be aware that, in combination with examples described in embodiments disclosed in this specification, units or algorithm operations may be implemented by hardware, software, or a combination of software and hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

In this application, "implemented by software" may mean that a processor reads and executes program instructions stored in a memory to implement a function corresponding to the foregoing module or unit. The processor is a processing circuit that has a function of executing the program instructions, and includes but is not limited to at least one of the following: various types of processing circuits that can execute the program instructions such as a central processing unit (central processing unit, CPU), a microprocessor, a digital signal processor (digital signal processor, DSP), a microcontroller unit (microcontroller unit, MCU), or an artificial intelligence processor. In some other embodiments, the processor may further include a circuit that has another processing function (for example, a hardware circuit, a bus, and an interface circuit that are used for hardware acceleration). The processor may be presented in a form of an integrated chip. For example, the processor may be presented in a form of an integrated chip whose processing function includes only a function of executing software instructions; or the processor may be presented in a form of a system on a chip (system on a chip, SoC). To be specific, on one chip, in addition to the processing circuit (which is usually referred to as a "core") that can execute the program instructions, another hardware circuit configured to implement a specific function is further included (where certainly, the hardware circuit may also be independently implemented based on an ASIC or an FPGA). Correspondingly, in addition to the function of executing software instructions, processing functions may further include various hardware acceleration functions (such as AI computing, encoding and decoding, and compression and decompression).

In this application, "implemented by hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an ASIC, or a programmable logic device (programmable logic device, PLD). The PLD may further include an FPGA, a complex programmable logic device (complex programmable logic device, CPLD), or the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as a system-on-a-programmable-chip (system-on-a-programmable-chip, SoPC).

It should be noted that, when this application is implemented by using software, hardware, or a combination of software and hardware, this application may be implemented by using different software and hardware, which is not limited to only one type of software or hardware. For example, one of the modules or units may be implemented through the CPU, and another module or unit may be implemented through the DSP. Similarly, when hardware is used for implementation, one of the modules or units may be implemented through the ASIC, and another module or unit may be implemented through the FPGA. Certainly, it is also not specified that some or all modules or units are implemented by using a same type of software (for example, through the CPU) or a same type of hardware (for example, through the ASIC). In addition, a person skilled in the art may know that, software usually has better flexibility but poorer performance than hardware, and hardware is exactly opposite. Therefore, a person skilled in the art may select software, hardware, or a combination thereof for implementation based on an actual requirement.

In the foregoing embodiments, the description of each embodiment has respective focuses. For a part that is not described in detail in an embodiment, refer to related descriptions in other embodiments. Embodiments of this application may be combined, or some technical features in embodiments may be decoupled from specific embodiments and combined with a conventional technology, to resolve the technical problem in embodiments of this application.

In embodiments of this application, the units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments in this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and may include several instructions for instructing a computer device, for example, a personal computer, a server, a network device, or a processor (processor) to perform all or some of the operations of the methods described in embodiments of this application. The foregoing storage medium may include any medium or computer-readable storage medium that can store program code, such as a USB flash drive, a removable hard disk, a read-only memory (read-only memory, ROM), a random access memory (random access memory, RAM), a magnetic disk, or an optical disc.

In descriptions of this application, terms such as "first", "second", "S201", or "S202" are merely used for distinguishing and description and for ease of organizing this article. Different sequences or numbers do not have specific technical meanings, and cannot be understood as indicating or implying relative importance, or indicating or implying an execution sequence of operations.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include", "have", and any other variants thereof are intended to cover the non-exclusive inclusion. For example, a process/method that includes a series of steps or a system/product/device that includes a series of units is not necessarily limited to those expressly listed steps or units, but may include other steps or units not expressly listed or inherent to these processes/methods/products/devices.

In the descriptions of this application, "at least one" represents one or more. "At least one of the following: A, B, and C is included" may indicate that A is included, B is included, C is included, A and B are included, A and C are included, B and C are included, or A, B and C are included.

The solutions provided in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system, a new radio (new radio, NR) system, or another network system that can be used to provide a mobile communication service. This is not limited in this application.

The foregoing descriptions are merely specific implementations of this application, but the protection scope of this application is not limited thereto. Any variation or replacement readily figured out by a person skilled in the art within the technical scope disclosed in this application shall fall within the protection scope of this application.

## Claims

1. A communication method, applied to a first node and comprising:
determining that a radio link failure RLF occurs on a radio link between the first node and a second node, and there is no other available path between the first node and a destination node; and
sending first indication information to a third node, wherein the first indication information indicates the RLF or indicates that a link recovery attempt is being made, wherein
the second node is a parent node of the first node, and the third node is a child node of the first node; or
the second node is a child node of the first node, and the third node is a parent node of the first node or a donor node connected to the first node.

2. The method according to claim 1, wherein when the second node is a parent node of the first node, and the third node is a child node of the first node, the method further comprises:
when attempting to recover the radio link, sending the first indication information to the third node, wherein the first indication information indicates that the link recovery attempt is being made.

3. The method according to claim 1 or 2, further comprising:
sending second indication information to the third node, wherein the second indication information indicates that a path that passes through the first node to the destination node is unavailable.

4. The method according to claim 3, wherein the second indication information comprises a backhaul adaptation protocol BAP layer address of the destination node, a routing identity routing ID corresponding to the path that passes through the first node to the destination node, or a path identity path ID corresponding to the path that passes through the first node to the destination node.

5. The method according to claim 4, wherein that the second indication information indicates that a path that passes through the first node to the destination node is unavailable comprises:
the second indication information indicates that all paths that pass through the first node to the destination node are unavailable;
the second indication information indicates that a path whose corresponding path ID is equal to the path ID comprised in the second indication information is unavailable in all paths that pass through the first node to the destination node; or
the second indication information indicates that a path whose corresponding routing ID is equal to the routing ID comprised in the second indication information is unavailable in all paths that pass through the first node to the destination node.

6. The method according to claim 3, wherein when the second node is a child node of the first node, and the third node is a donor node connected to the first node, the second indication information comprises an identifier of the second node.

7. The method according to claim 6, wherein that the second indication information indicates that a path that passes through the first node to the destination node is unavailable comprises:
the second indication information indicates that a path that comprises the direct radio link between the first node and the second node is unavailable in all paths that pass through the first node to the destination node.

8. A communication method, applied to a third node and comprising:
receiving second indication information from a first node, wherein the second indication information indicates that a path that passes through the first node to a destination node is unavailable; and
determining to route data to the destination node through another path.

9. The method according to claim 8, wherein the method further comprises:
receiving first indication information from the first node, wherein the first indication information indicates an RLF or indicates that a link recovery attempt is being made.

10. The method according to claim 8 or 9, wherein the second indication information comprises a backhaul adaptation protocol BAP layer address of the destination node, a routing identity routing ID corresponding to the path that passes through the first node to the destination node, or a path identity path ID corresponding to the path that passes through the first node to the destination node.

11. The method according to claim 10, wherein the another path does not comprise the first node, a routing ID of the another path is not equal to the routing ID comprised in the second indication information, or a path ID of the another path is not equal to the path ID comprised in the second indication information.

12. The method according to claim 8 or 9, wherein the second indication information comprises an identifier of a second node, the second node is a child node of the first node, and the RLF occurs on a radio link between the first node and the second node.

13. The method according to claim 12, wherein a routing ID of the another path is not equal to a routing ID corresponding to a path that passes through the first node to the destination node and that comprises the direct radio link between the first node and the second node.

14. The method according to any one of claims 8 to 13, further comprising:
receiving third indication information from the first node, wherein the third indication information indicates that radio link recovery succeeds; and
stopping routing the data to the destination node through the another path.

15. A communication method, applied to a first node and comprising:
receiving a first message from a master base station of a fourth node, wherein the first message requests to add the first node as a secondary base station of the fourth node, and
the first message comprises:
a physical cell identifier PCI of a cell that is of a second node and that is accessed by the fourth node and a cell radio network temporary identifier C-RNTI of the fourth node in the cell of the second node; or
an identifier of a third node and an identifier of the fourth node on an interface between the third node and the first node, wherein
the third node is a source secondary base station of the fourth node, and the fourth node is a downstream node of the second node; and
obtaining context information of the fourth node.

16. The method according to claim 15, wherein before the receiving a first message, the method further comprises:
receiving a second message from the second node, wherein the second message requests to establish or re-establish a radio resource control RRC connection to the second node;
sending a third message to the third node, wherein the third message requests to obtain context information related to the second node;
receiving a fourth message from the third node, wherein the fourth message comprises the context information related to the second node; and
sending a fifth message to the second node, wherein the fifth message is used to establish or re-establish the RRC connection to the second node.

17. The method according to claim 16, wherein the fifth message comprises information used to update a cell served by the second node.

18. The method according to claim 17, wherein the information used to update the cell served by the second node comprises a global cell identifier CGI and/or a cell identity of the cell of the second node when the second node is connected to the first node.

19. The method according to any one of claims 15 to 18, wherein the context information related to the second node comprises at least one of the following: context information of the second node, topology information between the second node and the fourth node, the context information of the fourth node, indication information indicating whether the second node is a wireless backhaul device, or indication information indicating whether the fourth node is a wireless backhaul device.

20. The method according to claim 19, wherein the context information of the fourth node comprises:
the PCI and the C-RNTI; or
the identifier of the third node and the identifier of the fourth node on the interface between the third node and the first node.

21. A communication method, applied to a master base station of a fourth node and comprising:
receiving a sixth message from a third node, wherein the sixth message requests to use a first node as a target secondary base station of the fourth node, and the third node is a source secondary base station of the fourth node; and
sending a first message to the first node, wherein the first message requests to add the first node as a secondary base station of the fourth node, and the first message comprises:
a physical cell identifier PCI of a cell that is of a second node and that is accessed by the fourth node and a cell radio network temporary identifier C-RNTI of the fourth node in the cell of the second node; or
an identifier of the third node and an identifier of the fourth node on an interface between the third node and the first node.

22. A communication apparatus, comprising:
a processing module, configured to determine that a radio link failure RLF occurs on a radio link between the apparatus and a second node, and there is no other available path between the apparatus and a destination node; and
a sending module, configured to send first indication information to a third node, wherein the first indication information indicates the RLF or indicates that a link recovery attempt is being made, wherein
the second node is a parent node of a first node, and the third node is a child node of the first node; or
the second node is a child node of a first node, and the third node is a parent node of the first node or a donor node connected to the first node.

23. The apparatus according to claim 22, wherein when the second node is a parent node of the first node, and the third node is a child node of the first node, the sending module is specifically configured to:
when attempting to recover the radio link, send the first indication information to the third node, wherein the first indication information indicates that the link recovery attempt is being made.

24. The apparatus according to claim 22 or 23, wherein the sending module is further configured to:
send second indication information to the third node, wherein the second indication information indicates that a path that passes through the first node to the destination node is unavailable.

25. The apparatus according to claim 24, wherein the second indication information comprises a backhaul adaptation protocol BAP layer address of the destination node, a routing identity routing ID corresponding to the path that passes through the first node to the destination node, or a path identity path ID corresponding to the path that passes through the first node to the destination node.

26. The apparatus according to claim 25, wherein that the second indication information indicates that a path that passes through the first node to the destination node is unavailable comprises:
the second indication information indicates that all paths that pass through the first node to the destination node are unavailable;
the second indication information indicates that a path whose corresponding path ID is equal to the path ID comprised in the second indication information is unavailable in all paths that pass through the first node to the destination node; or
the second indication information indicates that a path whose corresponding routing ID is equal to the routing ID comprised in the second indication information is unavailable in all paths that pass through the first node to the destination node.

27. The apparatus according to claim 24, wherein when the second node is a child node of the first node, and the third node is a donor node connected to the first node, the second indication information comprises an identifier of the second node.

28. The apparatus according to claim 27, wherein that the second indication information indicates that a path that passes through the first node to the destination node is unavailable comprises:
the second indication information indicates that a path that comprises the direct radio link between the first node and the second node is unavailable in all paths that pass through the first node to the destination node.

29. A communication apparatus, comprising:
an obtaining module, configured to receive second indication information from a first node, wherein the second indication information indicates that a path that passes through the first node to a destination node is unavailable; and
a processing module, configured to determine to route data to the destination node through another path.

30. The apparatus according to claim 29, wherein the obtaining module is further configured to:
receive first indication information from the first node, wherein the first indication information indicates an RLF or indicates that a link recovery attempt is being made.

31. The apparatus according to claim 29 or 30, wherein the second indication information comprises a backhaul adaptation protocol BAP layer address of the destination node, a routing identity routing ID corresponding to the path that passes through the first node to the destination node, or a path identity path ID corresponding to the path that passes through the first node to the destination node.

32. The apparatus according to claim 31, wherein the another path does not comprise the first node, a routing ID of the another path is not equal to the routing ID comprised in the second indication information, or a path ID of the another path is not equal to the path ID comprised in the second indication information.

33. The apparatus according to claim 29 or 30, wherein the second indication information comprises an identifier of a second node, the second node is a child node of the first node, and the RLF occurs on a radio link between the first node and the second node.

34. The apparatus according to claim 33, wherein a routing ID of the another path is not equal to a routing ID corresponding to a path that passes through the first node to the destination node and that comprises the direct radio link between the first node and the second node.

35. The apparatus according to any one of claims 29 to 34, wherein
the obtaining module is further configured to receive third indication information from the first node, wherein the third indication information indicates that radio link recovery succeeds; and
the processing module is further configured to stop routing the data to the destination node through the another path.

36. A communication apparatus, comprising:
an obtaining module, configured to receive a first message from a master base station of a fourth node, wherein the first message requests to add a first node as a secondary base station of the fourth node, and
the first message comprises:
a physical cell identifier PCI of a cell that is of a second node and that is accessed by the fourth node and a cell radio network temporary identifier C-RNTI of the fourth node in the cell of the second node; or
an identifier of a third node and an identifier of the fourth node on an interface between the third node and the first node, wherein
the third node is a source secondary base station of the fourth node, and the fourth node is a downstream node of the second node; and
a processing module, configured to obtain context information of the fourth node.

37. The apparatus according to claim 36, wherein before receiving the first message, the obtaining module is further configured to receive a second message from the second node, wherein the second message requests to establish or re-establish a radio resource control RRC connection to the second node; and the apparatus further comprises:
a sending module, configured to send a third message to the third node, wherein the third message requests to obtain context information related to the second node, wherein
the obtaining module is further configured to receive a fourth message from the third node, wherein the fourth message comprises the context information related to the second node; and
the sending module is further configured to send a fifth message to the second node, wherein the fifth message is used to establish or re-establish the RRC connection to the second node.

38. The apparatus according to claim 37, wherein the fifth message comprises information used to update a cell served by the second node.

39. The apparatus according to claim 38, wherein the information used to update the cell served by the second node comprises a global cell identifier CGI and/or a cell identity of the cell of the second node when the second node is connected to the first node.

40. The apparatus according to any one of claims 36 to 39, wherein the context information related to the second node comprises at least one of the following: context information of the second node, topology information between the second node and the fourth node, the context information of the fourth node, indication information indicating whether the second node is a wireless backhaul device, or indication information indicating whether the fourth node is a wireless backhaul device.

41. The apparatus according to claim 40, wherein the context information of the fourth node comprises:
the PCI and the C-RNTI; or
the identifier of the third node and the identifier of the fourth node on the interface between the third node and the first node.

42. A communication apparatus, applied to a master base station of a fourth node and comprising:
an obtaining module, configured to receive a sixth message from a third node, wherein the sixth message requests to use a first node as a target secondary base station of the fourth node, and the third node is a source secondary base station of the fourth node; and
a sending module, configured to send a first message to the first node, wherein the first message requests to add the first node as a secondary base station of the fourth node, and the first message comprises:
a physical cell identifier PCI of a cell that is of a second node and that is accessed by the fourth node and a cell radio network temporary identifier C-RNTI of the fourth node in the cell of the second node; or
an identifier of the third node and an identifier of the fourth node on an interface between the third node and the first node.

43. A communication apparatus, comprising at least one processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 21 by using a logic circuit or by executing code instructions.

44. A communication system, comprising the communication apparatus according to any one of claims 22 to 28 and the communication apparatus according to any one of claims 29 to 3 5; or comprising the communication apparatus according to any one of claims 36 to 41 and the communication apparatus according to claim 42.

45. A computer-readable storage medium, wherein the computer-readable storage medium stores a computer program or instructions, and when the computer program or the instructions are executed by a communication apparatus, the communication apparatus is enabled to perform the method according to any one of claims 1 to 21.

46. A computer program product, comprising computer program instructions, wherein when the computer program instructions are executed by a communication apparatus, the communication apparatus is enabled to perform the method according to any one of claims 1 to 21.
